# EUROPEAN PATENT APPLICATION

(11) **EP 4 351 063 A1**
(43) Date of publication of application: **10.04.2024**
(21) Application number: 22827430.4
(22) Date of filing: 14.06.2022
(51) Int. Cl.: H04L 5/00, H04W 4/02, H04W 64/00, H04W 72/04

(54) **REFERENCE SIGNAL SENDING AND CONFIGURATION METHOD AND APPARATUS**

(30) Priority: 25.06.2021 CN 202110709452
(71) Applicant: Huawei Technologies Co., Ltd., Shenzhen, Guangdong 518129 (CN)
(72) Inventor: HUANG, Su, Shenzhen, Guangdong 518129 (CN); MAZZARESE, David Jean-Marie, Shenzhen, Guangdong 518129 (CN)
(74) Representative: Huawei European IPR
(86) International application number: PCT/CN2022/098691
(87) International publication number: WO 2022/267934

(57) **Abstract**

A reference signal sending method and apparatus and a reference signal configuration method and apparatus are provided. The reference signal sending method includes: A terminal device switches from a first carrier of a first serving cell to a second carrier of a non-serving cell. The terminal device sends an SRS by using the second carrier. According to the method and apparatus in this application, a communication bandwidth is decoupled from a positioning bandwidth through SRS carrier switching of a non-serving cell, thereby meeting a high-precision positioning requirement of an IoT-type terminal device.

## Description

### CROSS-REFERENCE TO RELATED APPLICATIONS

This application claims priority to Chinese Patent Application No. 202110709452.7, filed with the China National Intellectual Property Administration on June 25, 2021 and entitled "REFERENCE SIGNAL SENDING METHOD AND APPARATUS AND REFERENCE SIGNAL CONFIGURATION METHOD AND APPARATUS", which is incorporated herein by reference in its entirety.

### TECHNICAL FIELD

Embodiments of this application relate to the field of communication technologies, and in particular, to a reference signal sending method and apparatus and a reference signal configuration method and apparatus.

### BACKGROUND

With development of communication services, a positioning service plays a significant role as an indispensable part of mobile communication and personal communication services. The positioning service is a value-added service for obtaining location information of a mobile terminal user through a network of a telecommunications mobile operator, and providing a corresponding service for the user under the support of an electronic map platform.

For example, the principle of an uplink-time difference of arrival (uplink-time difference of arrival, UL-TDOA) algorithm is as follows: A terminal device sends a sounding reference signal (sounding reference signal, SRS). After receiving the SRS from the terminal device, a base station participating in positioning determines a location of the terminal device based on a time difference of arrivals of the SRS at different base stations. How to send and configure an SRS is a technical problem to be resolved in embodiments of this application.

### SUMMARY

Embodiments of this application provide a reference signal sending method and apparatus and a reference signal configuration method and apparatus, to implement SRS sending and configuration.

According to a first aspect, a reference signal sending method is provided, and includes: A terminal device switches from a first carrier of a first serving cell to a second carrier of a non-serving cell; and the terminal device sends a sounding reference signal SRS by using the second carrier.

According to the foregoing method, the terminal device may send the SRS on the second carrier of the non-serving cell. As the non-serving cell does not provide a communication service, a carrier bandwidth configured for UE in a form of the non-serving cell is not limited by a communication bandwidth, so that the communication bandwidth is decoupled from a positioning bandwidth. For example, a bandwidth of the second carrier may be greater than the communication bandwidth, to meet a high-precision positioning requirement of an loT-type terminal.

In a possible design, the method further includes: The terminal device receives configuration information of the SRS from an access network device, where the configuration information of the SRS includes at least indication information of an SRS frequency; and the terminal device determines the second carrier based on the indication information of the SRS frequency.

For example, the terminal device may determine a first frequency or a first frequency based on the indication information of the SRS frequency. The first frequency or the first frequency may be a center frequency of the second carrier, a frequency that has an offset value with a center frequency of the second carrier, or the like. This is not limited. The terminal device determines the second carrier or the like based on the first frequency or the first frequency. According to the foregoing design, the access network device may indicate the first frequency or the first frequency to the terminal device, and the terminal device determines, based on a capability of the terminal device or a required positioning bandwidth, the second carrier to send the SRS, so that the SRS is sent with a large bandwidth, thereby meeting a high-precision positioning requirement of the terminal device.

In a possible design, the indication information of the SRS frequency includes at least one of the following: an absolute radio frequency channel number ARFCN of the SRS, a bandwidth of the second carrier, an available resource block RB set of the second carrier, or an ARFCN of the second carrier.

In a possible design, the configuration information of the SRS is not related to a cell group configuration. For example, the configuration information of the SRS may be carried in a first information element, and the first information element may include a mobility measurement configuration information element of the terminal device.

According to the foregoing design, the configuration information of the SRS in this embodiment of this application is carried in the first information element that is not related to a cell group. When receiving the configuration information of the SRS, the terminal device may determine that the SRS is different from a positioning or communication SRS in a current solution and needs to be sent on a carrier of a non-serving cell. Further, the second carrier that is in the non-serving cell and that is for sending the SRS may be determined based on the indication information of the SRS frequency that is carried in the configuration information of the SRS. It can be learned that, in the foregoing configuration manner, a configuration of the SRS in this embodiment of this application can be distinguished from a configuration of an SRS for communication or positioning in the current solution.

In a possible design, the configuration information of the SRS may be related to a cell group configuration. For example, the configuration information of the SRS may be carried in a second information element, the second information element is configured to configure a virtual carrier of the terminal device, and the second carrier is the virtual carrier. Optionally, the virtual carrier is irrelevant to a CA capability of the terminal device.

According to the foregoing design, the configuration information of the SRS is carried in the virtual carrier, so that a configuration of the SRS in this embodiment of this application is distinguished from a configuration of an SRS for positioning or communication in the current solution.

In a possible design, that a terminal device switches from a first carrier of a serving cell to a second carrier of a non-serving cell includes: The terminal device interrupts communication on the first carrier; and the terminal device switches a radio frequency operating frequency of the terminal device from a radio frequency of the first carrier to a radio frequency of the second carrier.

In a possible design, the method further includes: The terminal device receives configuration information of a measurement gap from the access network device, where the measurement gap is a time range in which the SRS is allowed to be sent. That a terminal device switches from a first carrier of a serving cell to a second carrier of a non-serving cell includes: The terminal device in the measurement gap performs the steps of interrupting communication on the first carrier and switching a radio frequency operating frequency of the terminal device from a radio frequency of the first carrier to a radio frequency of the second carrier.

In a possible design, the measurement gap is a measurement gap in a first frequency range. That the terminal device interrupts communication on the first carrier includes: The terminal device in the measurement gap interrupts communication of a serving cell included in the first frequency range.

In a possible design, the measurement interval is a measurement gap of the terminal device. That the terminal device interrupts communication on the first carrier include: The terminal device interrupts communication of all serving cells in the measurement gap.

In a possible design, the method further includes: The terminal device receives first indication information from the access network device, where the first indication information indicates the terminal device to interrupt communication on the first carrier or interrupt communication on a first frequency band that includes the first carrier; and the terminal device interrupts communication on the first carrier or on the first frequency band before sending the SRS.

In a possible design, the method further includes: The terminal device determines an uplink timing advance TA value of the SRS based on an uplink TA value of a second serving cell.

According to the foregoing design, as uplink synchronization is not performed on the second carrier, the terminal device may determine the uplink TA value of the SRS based on an uplink TA value of any serving cell (for example, the second serving cell), to ensure uplink synchronization between the terminal device and the access network device.

In a possible design, the method further includes: The terminal device determines transmit power of the SRS based on a downlink reference signal of a third serving cell.

According to the foregoing design, as the second carrier has no corresponding downlink carrier, UE may determine the transmit power of the SRS based on a downlink reference signal of any serving cell (for example, the third serving cell), to determine and adjust the transmit power of the SRS.

In a possible design, the method further includes: The terminal device switches from the second carrier to the first carrier after the terminal device sends the SRS.

In a possible design, the method further includes: The terminal device receives a capability request message from the access network device or a core network device, where the capability request message includes indication information of at least one target frequency band; and the terminal device sends a capability message of the terminal device to the access network device or the core network device, where the capability message of the terminal device indicates a capability of the terminal device to send the SRS on a carrier of a non-serving cell in the target frequency band.

In a possible design, the capability message of the terminal device indicates at least one of the following: a switching time for the terminal device to switch from a source frequency band to a target frequency band, a parameter of an SRS resource configured on the target frequency band, whether a carrier of the source frequency band supports partial switching, whether a carrier of the source frequency band supports partial radio frequency channel switching, a sub-carrier space of an SRS supported on the target frequency band, a bandwidth of an SRS supported on the target frequency band, information about one or more target frequency bands, or information, for each target frequency band, about a source frequency band that supports switching to the target frequency band.

According to a second aspect, a reference signal configuration method is provided, and includes: An access network device generates configuration information of a sounding reference signal SRS; and the access network device sends the configuration information of the SRS to a terminal device, where the configuration information of the SRS is on a second carrier of a non-serving cell of the terminal device, and the configuration information of the SRS includes at least indication information of an SRS frequency.

According to the foregoing design, the access network device configures the SRS for the terminal device on the second carrier of the non-serving cell. As the non-serving cell is not configured to transmit a communication service, a bandwidth of the second carrier of the non-serving cell is not limited by a communication bandwidth. According to the method in this application, the communication bandwidth of the terminal device can be decoupled from a positioning bandwidth, thereby implementing high-precision positioning of an IoT-type terminal device.

In a possible design, the indication information of the SRS frequency includes at least one of the following: an absolute radio frequency channel number ARFCN of the SRS, a bandwidth of the second carrier, an available resource block RB set of the second carrier, or an ARFCN of the second carrier.

In a possible design, the configuration information of the SRS is not related to a cell group configuration. For example, the configuration information of the SRS may be carried in a first information element, and the first information element may include a mobility measurement configuration information element of the terminal device.

In a possible design, the configuration information of the SRS may be related to a cell group configuration. For example, the configuration information of the SRS may be carried in a second information element, the second information element is configured to configure a virtual carrier of the terminal device, and the second carrier is the virtual carrier.

In a possible design, the method further includes: The access network device receives the SRS from the terminal device on the second carrier.

In a possible design, the method further includes: The access network device sends configuration information of a measurement gap to the terminal device, where the measurement gap is a time range in which the SRS is allowed to be sent.

In a possible design, the measurement gap is a measurement gap in a first frequency range or a measurement gap of the terminal device.

In a possible design, the method further includes: The access network device sends first indication information to the terminal device, where the first indication information indicates the terminal device to interrupt communication on the first carrier or interrupt communication on a first frequency band that includes the first carrier.

In a possible design, the method further includes: The access network device sends a capability request message to the terminal device, where the capability request message includes indication information of at least one target frequency band; and the access network device receives a capability message from the terminal device, where the capability message of the terminal device indicates a capability of the terminal device to send the SRS on a non-serving cell in a target frequency band.

In a possible design, the capability message of the terminal device indicates at least one of the following: a switching time for the terminal device to switch from a source frequency band to a target frequency band, a parameter of an SRS configured on the target frequency band, whether a carrier of the source frequency band supports partial switching, whether a carrier of the source frequency band supports partial radio frequency channel switching, a sub-carrier space of an SRS supported on the target frequency band, a bandwidth of an SRS supported on the target frequency band, information about one or more target frequency bands, or information, for each target frequency band, about a source frequency band that supports switching to the target frequency band.

According to a third aspect, an apparatus is provided. For beneficial effects, refer to the description in the first aspect. The apparatus may be a terminal device, an apparatus configured in a terminal device, or an apparatus that can be used in a matching manner together with a terminal device. In a design, the apparatus includes units that are in a one-to-one correspondence with the methods/operations/steps/actions described in the first aspect. The units may be implemented by a hardware circuit, software, or a combination of a hardware circuit and software. For example, the apparatus includes a processing unit and a communication unit, and the processing unit and the communication unit may perform corresponding functions in any design example of the first aspect. Specifically, the processing unit is configured to switch from a first carrier of a first serving cell to a second carrier of a non-serving cell; and the communication unit is configured to send a sounding reference signal SRS by using the second carrier. For a specific execution process of the processing unit and the communication unit, refer to the first aspect. Details are not described herein again.

According to a fourth aspect, an apparatus is provided. For beneficial effects, refer to the description in the first aspect. The apparatus includes a memory configured to implement the method described in the first aspect. The apparatus may further include a memory configured to store instructions and/or data. The memory is coupled to a processor. When the processor executes program instructions stored in the memory, the method described in the first aspect can be implemented. The apparatus may include a communication interface. The communication interface is configured for the apparatus to be in communication with another device. For example, the communication interface may be a transceiver, a circuit, a bus, a module, a pin, or a communication interface of another type. In a possible design, the apparatus includes:
a memory, configured to store program instructions;
a processor, configured to switch from a first carrier of a first serving cell to a second carrier of a non-serving cell; and
a communication interface, configured to send a sounding reference signal SRS by using the second carrier, where for specific execution processes of the communication interface and the processor, refer to the description in the first aspect, and details are not described again.

According to a fifth aspect, an apparatus is provided. For beneficial effects, refer to the description in the second aspect. The apparatus may be an access network device, an apparatus configured in an access network device, or an apparatus that can be used in a matching manner together with an access network device. In a design, the apparatus includes units that are in a one-to-one correspondence with the methods/operations/steps/actions described in the second aspect. The units may be implemented by a hardware circuit, software, or a combination of a hardware circuit and software. For example, the apparatus includes a processing unit and a communication unit, and the processing unit and the communication unit may perform corresponding functions in any design example of the second aspect. Specifically, the processing unit is configured to generate configuration information of a sounding reference signal SRS; and the communication unit is configured to send the configuration information of the SRS to a terminal device, where the configuration information of the SRS is on a second carrier of a non-serving cell of the terminal device, and the configuration information of the SRS includes at least indication information of an SRS frequency. For a specific execution process of the processing unit and the communication unit, refer to the second aspect. Details are not described herein again.

According to a sixth aspect, an apparatus is provided. For beneficial effects, refer to the description in the second aspect. The apparatus includes a memory configured to implement the method described in the second aspect. The apparatus may further include a memory configured to store instructions and/or data. The memory is coupled to a processor. When the processor executes program instructions stored in the memory, the method described in the second aspect can be implemented. The apparatus may include a communication interface. The communication interface is configured for the apparatus to be in communication with another device. For example, the communication interface may be a transceiver, a circuit, a bus, a module, a pin, or a communication interface of another type. In a possible design, the apparatus includes:
a memory, configured to store program instructions;
a processor, configured to generate configuration information of a sounding reference signal SRS; and
a communication interface, configured to send the configuration information of the SRS to a terminal device, where the configuration information of the SRS is on a second carrier of a non-serving cell of the terminal device, and the configuration information of the SRS includes at least indication information of an SRS frequency; and for a specific execution process of the communication interface and the processor, refer to the description in the second aspect, and details are not described again.

According to a seventh aspect, an embodiment of this application further provides a computer-readable storage medium, including instructions. When the instructions are run on a computer, the computer is enabled to perform the method according to the first aspect or the second aspect.

According to an eighth aspect, an embodiment of this application further provides a chip system. The chip system includes a processor, may further include a memory, and is configured to implement the method according to the first aspect or the second aspect. The chip system may include a chip, or may include a chip and another discrete component.

According to a ninth aspect, an embodiment of this application further provides a computer program product, including instructions. When the instructions are run on a computer, the computer is enabled to perform the method according to the first aspect or the second aspect.

According to a tenth aspect, an embodiment of this application further provides a system, including the apparatus according to the third aspect or the fourth aspect and the apparatus according to the fifth aspect or the sixth aspect, or including the apparatus according to the third aspect or the fourth aspect and an LMF network element.

### BRIEF DESCRIPTION OF DRAWINGS

FIG. 1 is a schematic diagram of a network architecture according to an embodiment of this application;
FIG. 2a to FIG. 2d are schematic diagrams of protocol stacks according to an embodiment of this application;
FIG. 3A and FIG. 3B are a flowchart of UL-TDOA positioning according to an embodiment of this application;
FIG. 4 is a flowchart of a method according to Embodiment 1 of this application;
FIG. 5 to FIG. 10 are schematic diagrams of virtual cells or virtual carriers according to an embodiment of this application;
FIG. 11 to FIG. 16 are schematic diagrams of carrier switching according to an embodiment of this application;
FIG. 17 is a flowchart of a method according to Embodiment 2 of this application;
FIG. 18 is a flowchart of a method according to Embodiment 3 of this application;
FIG. 19 is a schematic diagram of an apparatus according to an embodiment of this application;
FIG. 20 is a schematic diagram of a terminal device according to an embodiment of this application; and
FIG. 21 is a schematic diagram of an access network device according to an embodiment of this application.

### DESCRIPTION OF EMBODIMENTS

The following describes technical solutions in embodiments of this application with reference to accompanying drawings in embodiments of this application.

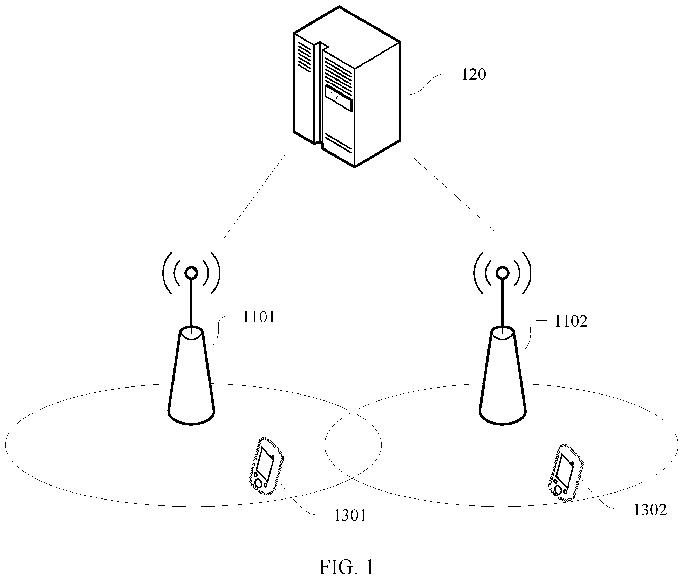

FIG. 1 shows a network architecture to which embodiments of this application are applied. As shown in FIG. 1, a terminal device (for example, a terminal device 1301 or a terminal device 1302) may access a wireless network, to obtain a service of an external network (for example, the Internet) through the wireless network or to be in communication with another device through the wireless network, for example, may be in communication with another terminal device. The wireless network includes a radio access network (radio access network, RAN) and a core network (core network, CN). The following separately describes in detail the terminal device, the access network, and the core network that are involved in FIG. 1.

### 1. Terminal device

The terminal device may be referred to as a terminal for short, and is a device having a wireless transceiver function. The terminal device may be mobile or fixed. The terminal device may be deployed on land, including an indoor or outdoor, handheld, or on-board deployment; or may be deployed on a water surface (for example, a ship); or may be deployed in the air (for example, an airplane, a balloon, or a satellite). The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or computing device with a wireless communication function, an on-board device, a wearable device, a terminal device in the 5th generation (the 5th generation, 5G) network, a terminal device in a future evolved public land mobile network (public land mobile network, PLMN), or the like. The terminal device may also be referred to as user equipment (user equipment, UE) sometimes. Optionally, the terminal device may be in communication with a plurality of access network devices that use different technologies. For example, the terminal device may be in communication with an access network device that supports long term evolution (long term evolution, LTE), or may be in communication with an access network device that supports 5G, or may implement a dual connection to an access network device that supports LTE and an access network device that supports 5G. This is not limited in embodiments of this application.

In embodiments of this application, an apparatus for implementing a function of the terminal device may be a terminal device, or may be an apparatus that can support the terminal device to implement the function, for example, a chip system, a hardware circuit, a software module, or a hardware circuit and software module. The apparatus may be mounted in the terminal device or may be used in a matching manner together with the terminal device. In the technical solutions of embodiments of this application, an example in which the apparatus for implementing the function of the terminal device is a terminal device and the terminal device is UE is used to describe the technical solutions provided in embodiments of this application.

### 2. Access network

The access network may include one or more access network devices, for example, an access network device 1101 and an access network device 1102. The access network device is a device that connects a terminal device to a wireless network, and may provide the terminal device with functions such as radio resource management, quality of service management, and data encryption and compression. An interface between the access network device and the terminal device is referred to as a Uu interface (or referred to as an air interface). In future communication, names of these interfaces may remain unchanged, or may be replaced with other names. This is not limited in this application.

The access network device may also be referred to as a network device or a base station. For example, the access network device includes but is not limited to: a base station, a next-generation nodeB (generation nodeB, gNB) in 5G, an evolved nodeB (evolved nodeB, eNB), a radio network controller (radio network controller, RNC), a nodeB (nodeB, NB), abase station controller (base station controller, BSC), abase transceiver station (base transceiver station, BTS), a home base station (for example, a home evolved nodeB or a home nodeB, HNB), a baseband unit (baseband unit, BBU), a transmitting and receiving point (transmitting and receiving point, TRP), a transmitting point (transmitting point, TP), and/or a mobile switching center. Alternatively, the access network device may be at least one of a radio controller, a central unit (central unit, CU), a distributed unit (distributed unit, DU), a central unit control plane (CU control plane, CU-CP) node, a central unit user plane (CU user plane, CU-UP) node, or an integrated access and backhaul (integrated access and backhaul, IAB) node that are in a cloud radio access network (cloud radio access network, CRAN) scenario. Alternatively, the access network device may be a relay station, an access point, an on-board device, a terminal device, a wearable device, an access network device in a future 5G network, an access network device in a future evolved public land mobile network (public land mobile network, PLMN), or the like.

In embodiments of this application, an apparatus for implementing a function of the access network device may be an access network device, or may be an apparatus that can support the access network device to implement the function, for example, a chip system, a hardware circuit, a software module, or a hardware circuit and software module. The apparatus may be mounted in the access network device or may be used in a matching manner together with the access network device. In embodiments of this application, the chip system may include a chip, or may include a chip and another discrete component. In the technical solutions provided in embodiments of this application, an example in which the apparatus for implementing the function of the access network device is an access network device and the access network device is a base station is used to describe the technical solutions provided in embodiments of this application.

### (1) Protocol layer structure

Communication between an access network device and a terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Using the user plane protocol layer as an example, the SDAP layer is used to map data transmitted on a quality of service flow (QoS flow) to a radio bearer (radio bearer, RB) for transmission. The PDCP layer is used to perform user plane security protection, for example, encryption protection and/or integrity protection. The RLC layer is responsible for error correction and flow control. The MAC layer is responsible for controlling and connecting a physical medium at the physical layer. For example, when sending a data packet, the MAC layer may determine in advance whether the data packet can be sent. If the data packet can be sent, some control information is added to the data packet, and finally the data packet and the control information are sent to the PHY layer in a specified format. The PHY layer is used to provide a service for a bit or a bit group transmitted between the UE and the access network device.

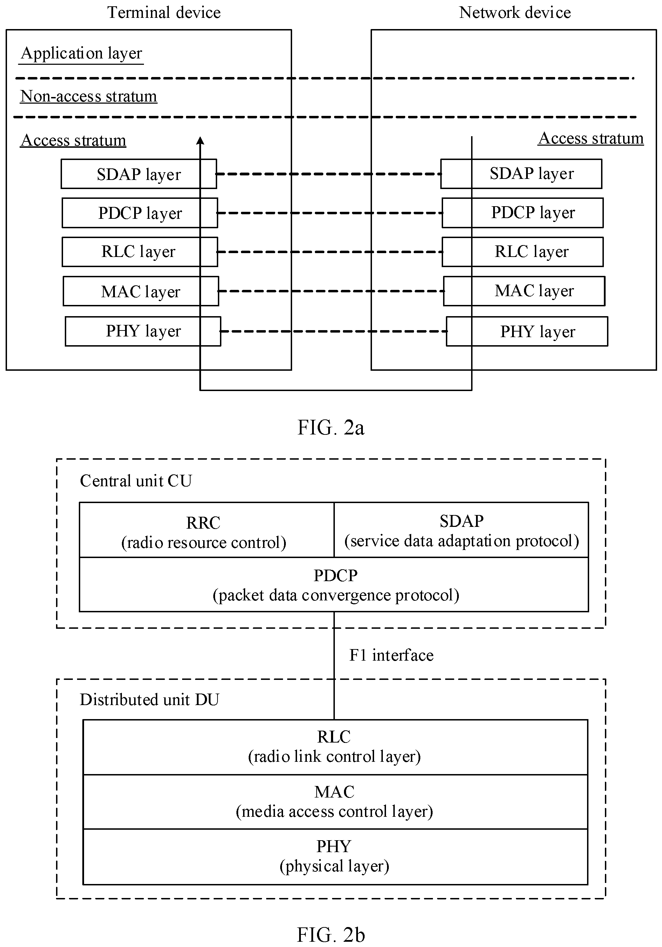

Using data transmission between the access network device and the terminal device as an example, the data transmission needs to pass through the user plane protocol layer, for example, through the SDAP layer, the PDCP layer, the RLC layer, the MAC layer, and the physical layer. The SDAP layer, the PDCP layer, the RLC layer, the MAC layer, and the physical layer may be collectively referred to as an access stratum. Because a data transmission direction includes sending or receiving, each layer is further divided into a sending part and a receiving part. Downlink data transmission is used as an example. FIG. 2a is a schematic diagram of downlink data transmission between layers. In FIG. 2a, a downward arrow represents data sending, and an upward arrow represents data receiving. After obtaining data from an upper layer, the PDCP layer transmits the data to the RLC layer and the MAC layer, the MAC layer generates a transmission block, and then wireless transmission is performed through the physical layer. The data is correspondingly encapsulated at each layer. For example, data received by a layer from an upper layer of the layer is considered as a service data unit (service data unit, SDU) of the layer, is encapsulated at the layer into a protocol data unit (protocol data unit, PDU), and is then transmitted to a next layer.

For example, it can be further learned from FIG. 2a that the terminal device may further have an application layer and a non-access stratum. The application layer may be used to provide a service for an application program installed on the terminal device. For example, downlink data received by the terminal device may be sequentially transmitted from the physical layer to the application layer, and then provided by the application layer for the application program. In another example, the application layer may obtain data generated by the application program, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

### (2) Central unit (central unit, CU) and distributed unit (distributed unit, DU)

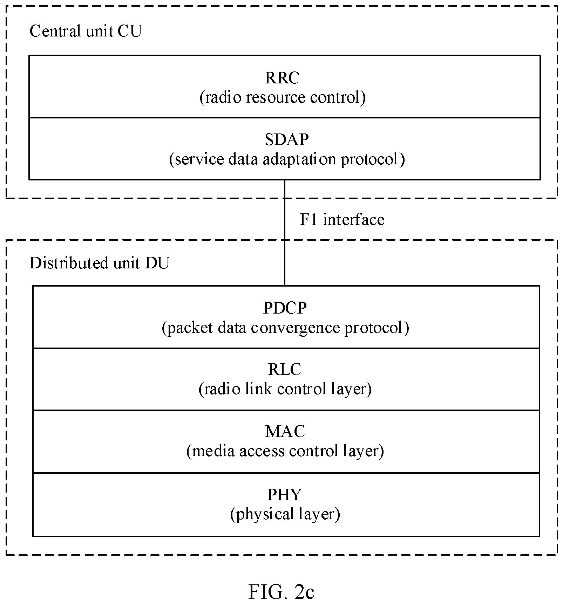

In this embodiment of this application, the access network device may include a CU and a DU. A plurality of DUs may be centrally controlled by one CU. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, as shown in FIG. 2b, functions of a PDCP layer and a protocol layer above the PDCP layer are set on the CU, and functions of a protocol layer below the PDCP layer (for example, an RLC layer and a MAC layer) are set on the DU. In another example, as shown in FIG. 2c, functions of a protocol layer above a PDCP layer are set on the CU, and functions of the PDCP layer and a protocol layer below the PDCP layer are set on the DU.

It may be understood that processing function division of the CU and the DU based on the protocol layers is merely an example, and there may be other division. For example, the CU or the DU may be divided into functions of more protocol layers. In another example, the CU or the DU may be divided into some processing functions of protocol layers. In a design, some functions of the RLC layer and functions of a protocol layer above the RLC layer are set on the CU, and the remaining functions of the RLC layer and functions of a protocol layer below the RLC layer are set on the DU. In another design, division of functions of the CU or the DU may alternatively be performed based on service types or other system requirements. For example, division may be performed based on a delay. Functions whose processing time needs to meet a delay requirement are set on the DU, and functions whose processing time does not need to meet the delay requirement are set on the CU. In another design, the CU may alternatively have one or more functions of a core network. For example, the CU may be disposed on a network side to facilitate centralized management. In another design, a radio unit (radio unit, RU) of the DU is disposed remotely. The RU has a radio frequency function.

Optionally, the DU and the RU may be divided at a physical layer (physical layer, PHY). For example, the DU may implement a higher-layer function of the PHY layer, and the RU may implement a lower-layer function of the PHY layer. When the PHY layer is used for sending, functions of the PHY layer may include cyclic redundancy check (cyclic redundancy check, CRC) code addition, channel coding, rate matching, scrambling, modulation, layer mapping, precoding, resource mapping, physical antenna mapping, and/or radio frequency sending. When the PHY layer is used for receiving, functions of the PHY layer may include CRC, channel decoding, rate de-matching, descrambling, demodulation, layer demapping, channel detection, resource demapping, physical antenna demapping, and/or radio frequency receiving. The higher-layer function of the PHY layer may include one part of functions of the PHY layer. For example, the part of functions is closer to the MAC layer. The lower-layer function of the PHY layer may include the other part of functions of the PHY layer. For example, the other part of functions is closer to a radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending. Alternatively, the higher-layer function of the PHY layer may include CRC code addition, channel coding, rate matching, scrambling, modulation, layer mapping, and precoding, and the lower-layer function of the PHY layer may include resource mapping, physical antenna mapping, and radio frequency sending.

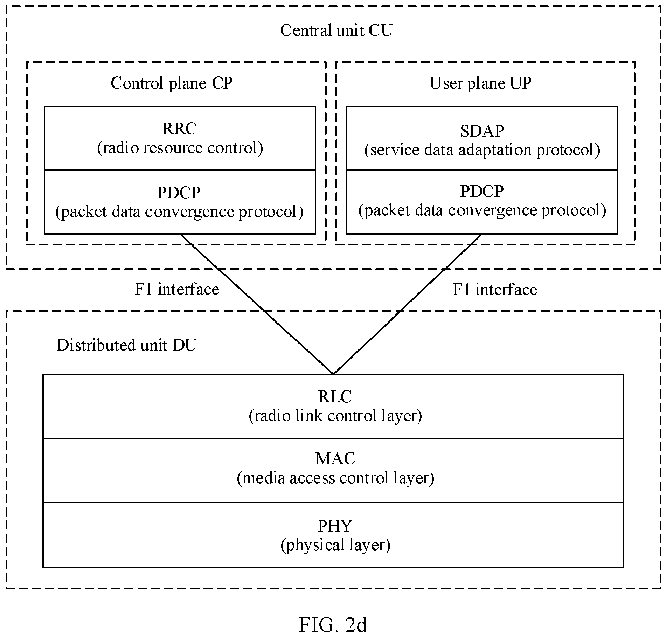

For example, the functions of the CU may be implemented by one entity or different entities. For example, as shown in FIG. 2d, functions of the CU may be further divided, that is, a control plane and a user plane are separated and implemented by using different entities, which are respectively a control plane CU entity (namely, a CU-CP entity) and a user plane CU entity (namely, a CU-UP entity). The CU-CP entity and the CU-UP entity may be coupled to the DU, to jointly complete a function of the access network device.

It should be noted that in the architectures shown in FIG. 2b to FIG. 2d, signaling generated by the CU may be sent to the terminal device via the DU, or signaling generated by the terminal device may be sent to the CU via the DU. For example, signaling at the RRC or PDCP layer is finally processed as signaling at the physical layer and sent to the terminal device, or is converted from signaling received from the physical layer. In this architecture, the signaling at the RRC or PDCP layer may be considered to be sent by using the DU, or sent by using the DU and the RU.

Optionally, any one of the DU, the CU, the CU-CP, the CU-UP, and the RU may be a software module, a hardware structure, or a software module + hardware structure. This is not limited. Different entities may exist in different forms, which is not limited. For example, the DU, the CU, the CU-CP, and the CU-UP are software modules, and the RU is a hardware structure. These modules and methods performed by the modules also fall within the protection scope of embodiments of this application.

### 3. Core network

The core network is mainly configured to manage a terminal device and provide a gateway for communication with an external network. The core network may include one or more core network devices, for example, a core network device 120. Using the 5^{th} generation (the 5^{th} generation, 5G) communication system as an example, the core network may include an access and mobility management function (access and mobility management function, AMF) network element, a location management function (location management function, LMF) network element, and the like.

The AMF network element is configured to manage access control and mobility of the terminal device. In a design, the AMF network element may include a mobility management function in a mobility management entity (mobility management entity, MME) in an LTE network architecture, and an access management function is added. The AMF network element may be specifically responsible for registration, mobility management, a tracking area update procedure, reachability detection, selection of a session management function network element, mobility status conversion management, or the like of the terminal device. The LMF network element is a network element that is deployed in the core network and that provides a positioning function for the terminal device. The LMF network element is mainly responsible for coordinating the terminal device and the access network device to perform positioning measurement, and calculating a location of the terminal device based on positioning measurement of the terminal device or the access network device. Optionally, the LMF network element may be further responsible for resource scheduling, assistance information obtaining, broadcast control, and the like of an air interface positioning signal. For a specific function of the LMF, refer to TS 23.273.

Optionally, the core network may further include one or more network elements of a session management function (session management function, SMF), a user plane function (user plane function, UPF), a policy control function (policy control function, PCF), an application function (application function, AF), unified data management (unified data management, UDM), an authentication server function (authentication server function, AUSF), a network slice selection function (network slice selection function, NSSF), and the like. This is not limited.

In embodiments of this application, an apparatus for implementing a function of the core network device may be a core network device, or may be an apparatus that can support the core network device to implement the function, for example, a chip system, a hardware circuit, a software module, or a hardware circuit and software module. The apparatus may be mounted in the core network device or may be used in a matching manner together with the core network device. In the technical solutions provided in embodiments of this application, an example in which the apparatus for implementing the function of the core network device is a core network device is used to describe the technical solutions provided in embodiments of this application.

It should be understood that quantities of devices in the communication system shown in FIG. 1 are merely used as an example. Embodiments of this application are not limited thereto. In an actual application, the communication system may further include more terminal devices and more access network devices, and may further include another device.

The network architecture shown in FIG. 1 is applicable to communication systems of various radio access technologies (radio access technology, RAT), for example, may be a 4G (also referred to as LTE) communication system, or may be a 5G (also referred to as NR) communication system, or may be a transition system between an LTE communication system and a 5G communication system. The transition system may also be referred to as a 4.5G communication system. Certainly, the network architecture is alternatively applicable to a future communication system, for example, a 6G communication system. The network architecture and service scenarios described in embodiments of this application are intended to describe the technical solutions in embodiments of this application more clearly, and do not constitute a limitation on the technical solutions provided in embodiments of this application. A person of ordinary skill in the art may know that, with the evolution of communication network architectures and the emergence of new service scenarios, the technical solutions provided in embodiments of this application are also applicable to similar technical problems.

In a current wireless communication system, a plurality of positioning algorithms are supported, for example, a downlink-time difference of arrival (downlink-time difference of arrival, DL-TDOA), a downlink-angle of departure (downlink-angle of departure, DL-AOD), an uplink-time difference of arrival (uplink-time difference of arrival, UL-TDOA), an uplink-angle of arrival (uplink-angle of arrival, UL-AOA), or a multi-round trip time (multi-round trip time, multi-RTT).

The algorithms such as DL-TDOA, UL-TDOA, and multi-RTT are time-of-arrival-based positioning algorithms, and a principle of the algorithms is as follows: The LMF determines location information of the UE based on different times of arrival of a reference signal at a receive end. For example, in a UL-TDOA positioning algorithm, a transmit end is UE, and a receive end is a base station. The UE sends an uplink reference signal to the base station. The base station measures the uplink reference signal, determines a measurement result of the uplink reference signal, and reports the measurement result to the LMF. The LMF determines, based on the measurement result reported by the base station, that times of arrival of the uplink reference signal are different, to determine location information of the UE. In a DL-TDOA positioning algorithm, a transmit end is a base station, and a receive end is UE. The base station sends a downlink reference signal to the UE. The UE measures the downlink reference signal, determines a measurement result of the downlink reference signal, and reports the measurement result to the LMF. The LMF determines location information of the UE based on the measurement result. DL-AOD, UL-AOA, and the like are angle-based positioning algorithms. A principle of the positioning algorithms is as follows: The LMF determines location information of the UE based on different angles at which a reference signal arrives at different receive ends. In a UL-AOA positioning algorithm, a transmit end is UE, and a receive end is a base station. The UE sends an uplink reference signal to the base station. The base station measures the uplink reference signal, determines a measurement result of the uplink signal, and reports the measurement result to the LMF. The LMF determines, based on the measurement result of the uplink signal, that different uplink reference signals arrive at the base station at different angles, to determine location information of the UE. In a DL-AOD positioning algorithm, a transmit end is a base station, and a receive end is UE. The base station sends a downlink reference signal to the UE. The UE measures the downlink reference signal, determines a measurement result of the downlink reference signal, and reports the measurement result to the LMF. The LMF determines, based on the measurement result, an angle at which the downlink signal arrives at the UE, and further determines location information of the UE.

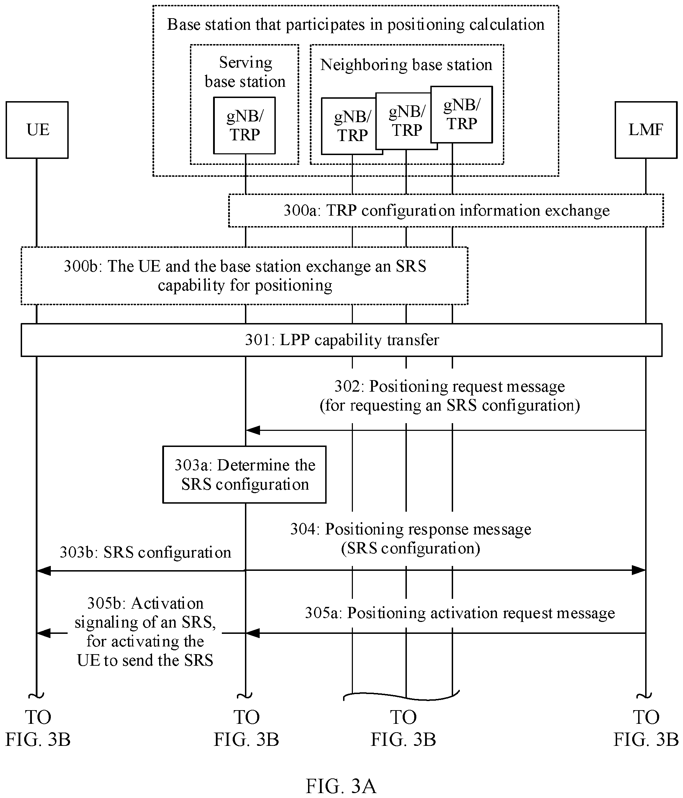

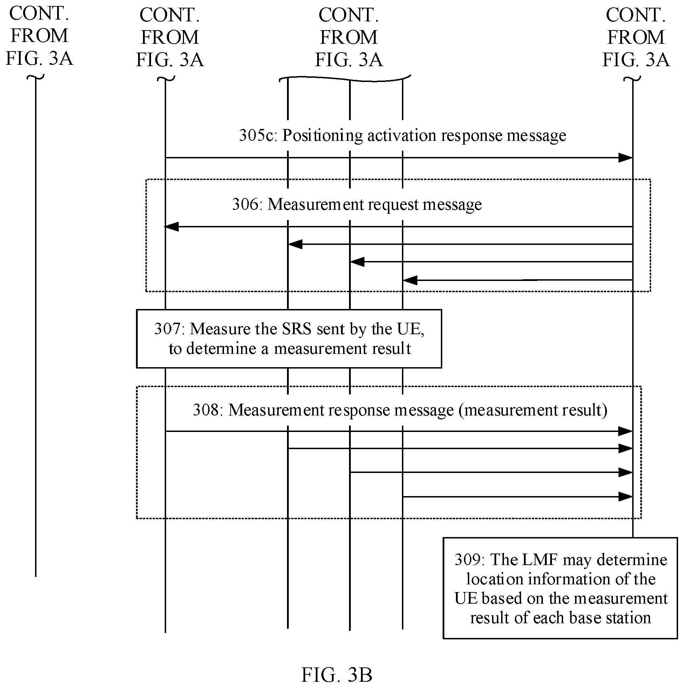

The following briefly describes a positioning procedure by using the UL-TDOA technology as an example. Refer to FIG. 3A and FIG. 3B. The positioning procedure includes at least the following steps:

Optionally, step 300a: An LMF and a base station perform TRP configuration information exchange (configuration information exchange). Optionally, the base station may be a base station participating in positioning calculation, including a serving base station and/or a neighboring base station of UE. In the serving base station and/or the neighboring base station of the UE, specific base stations that participate in positioning may be configured. For example, the LMF may configure a base station that participates in positioning calculation.

In a design, the TRP configuration information exchange is implemented based on a TRP request message (TRP information request) and a TRP response message (TRP information response). For example, the LMF sends a TRP request message to the base station, to request specific configuration information of a TRP from the base station; and the base station sends a TRP response message to the LMF, where the TRP response message includes the specific configuration information of the TRP that is returned by the base station to the LMF. In UL-TDOA positioning, the specific configuration information of the TRP that is returned by the base station to the LMF may include at least one of the following: a physical cell index of the TRP served by the base station, a global cell index, a TRP index, synchronization signal/physical broadcast channel block (synchronization signal/physical broadcast channel block, SSB) information (for example, time-frequency location information of an SSB) of the TRP, or geographic location information of the TRP (for example, specific geographic location information of a positioning reference signal (positioning reference signal, PRS) sent by the TRP). Optionally, the TRP may be a group of radio units (radio unit) that are co-located in the base station, and the radio unit may also be referred to as a radio head (radio head).

Optionally, step 300b: The UE and the base station exchange an SRS capability for positioning. For example, the base station may send a positioning SRS capability request to the UE. When receiving the request, the UE reports, to the base station, an SRS capability for positioning.

Step 301: The LMF and the UE perform LTE positioning protocol (LTE positioning protocol, LPP) capability transfer (capability transfer).

In a design, the LPP capability transfer is implemented based on a capability request (request capabilities) message and a capability provision (provide capabilities) message. For example, the LMF may send a capability request message to the UE. The capability request message may be carried in a new radio uplink capability request (NR-UL-request capabilities) information element, to request the UE to provide an SRS capability for positioning. The UE sends a capability provision message to the LMF. The capability provision message may be carried in a new radio uplink capability provision (NR-UL-provide capabilities) information element, and includes an SRS capability for positioning provided by the UE. For specific content of the reported SRS capability for positioning, refer to TS 37.355.

Step 302: The LMF sends a positioning request message (positioning information request) to a serving base station of the UE, where the positioning request message is for requesting the serving base station to configure an SRS for the UE.

Step 303a: The serving base station determines an SRS configuration. Optionally, the serving base station may determine the SRS configuration and the like based on the SRS capability for positioning that is reported by the UE in the step 300b.

Step 303b: If the serving base station does not provide the SRS configuration for the UE, the serving base station may send the SRS configuration to the UE. For example, the serving base station may send an RRC reconfiguration message to the UE. The RRC reconfiguration message includes the SRS configuration.

Step 304: The serving base station sends a positioning response message (positioning information response) to the LMF, where the positioning response message includes the SRS configuration.

Step 305a: If the SRS configured by the serving base station is not periodic, the LMF sends a positioning activation request (positioning activation request) message to the serving base station, where the positioning activation request message is for requesting the serving base station to activate the UE to send the SRS.

Step 305b: The serving base station sends activation signaling of the SRS to the UE, where the activation signaling is for activating the UE to send the SRS. Optionally, the UE may send the SRS in a broadcast or multicast manner. The base station participating in the positioning calculation may receive the SRS sent by the UE, and may measure the SRS sent by the UE, to determine a measurement result.

In a design, the activation signaling of the SRS may be MAC CE signaling, and is used to activate the UE to semi-persistently send an SRS in a predefined cycle. The UE may send the semi-persistent SRS in the predefined cycle until the UE receives deactivation signaling of the SRS. The deactivation signaling may be MAC CE signaling. Alternatively, the activation signaling of the SRS may be DCI, and is used to schedule the UE to send an aperiodic SRS for a single time. The semi-persistent SRS is described as follows: If the serving base station configures the UE to periodically send an SRS, the UE may send the SRS in a predefined or preconfigured cycle. A cycle may also be predefined or preconfigured for the semi-persistent SRS. However, different from the foregoing periodic SRS sending, before the UE sends the SRS in the foregoing cycle, the base station needs to activate sending of the SRS, that is, after receiving activation signaling, the UE periodically sends the SRS until the UE receives deactivation signaling of the SRS.

Step 305c: The serving base station sends a positioning activation response message to the LMF, where the positioning activation response message is for notifying the LMF that the serving base station has activated the UE to send the SRS.

Step 306: The LMF sends a measurement request (measurement request) message to the base station participating in the positioning calculation, to request the base station participating in the positioning to measure the SRS sent by the UE.

Step 307: The base station participating in the positioning calculation receives the SRS sent by the UE, and measures the SRS to generate a measurement result.

Step 308: The base station participating in the positioning sends a measurement response (measurement response) message to the LMF, where the measurement response message carries a measurement result of each base station.

Step 309: The LMF may determine location information of the UE based on the measurement result of each base station. For example, the LMF may determine, based on the measurement result of each base station, a time difference of arrivals of the SRS at different base stations; and the LMF determines the location information of the UE based on the time difference of arrivals of the SRS at different base stations.

It should be noted that, in this embodiment of this application, after the LMF obtains the location information of the UE, the LMF may send a positioning deactivation request to the serving base station, to request the serving base station to deactivate sending of the SRS by the UE. When receiving deactivation signaling of the SRS from the serving base station, the UE stops sending the SRS. In this case, the entire positioning process ends.

It can be learned from the foregoing positioning procedure that the UE needs to send an SRS to the base station that participates in positioning. In a current solution, the UE sends an SRS on an uplink carrier of a serving cell. A large bandwidth can provide a higher time resolution, provide more accurate estimation of a transmission delay, and have a better capability of resolving and suppressing indoor multipath. Therefore, high-precision positioning usually requires a large bandwidth. For UE that supports a small bandwidth, for example, Internet of Things (internet of things, IoT) UE, due to a small supported bandwidth, sending an SRS on an uplink carrier of a serving cell may cause insufficient positioning precision. However, increasing only a communication bandwidth of the UE of this type may cause increasing power consumption and costs of the UE. For the UE of this type, a communication bandwidth may be decoupled from a positioning bandwidth. For example, the UE may perform communication in a small bandwidth and send an SRS in a large bandwidth for positioning. In this case, power consumption, costs, and the like of the UE are not increased while positioning precision is improved. How to decouple a communication bandwidth from a positioning bandwidth through SRS carrier switching of a non-serving cell is a technical problem to be resolved in embodiments of this application.

An embodiment of this application provides a reference signal sending and configuration method. The method includes: Before sending an SRS, UE switches from a carrier of a serving cell to a carrier of a non-serving cell, and sends the SRS. As the non-serving cell does not provide a communication service, a carrier bandwidth configured for the UE in a form of the non-serving cell may not be limited by a communication bandwidth. For example, a large bandwidth may be configured for the carrier of the non-serving cell. Therefore, decoupling of the communication bandwidth from a positioning bandwidth can be implemented.

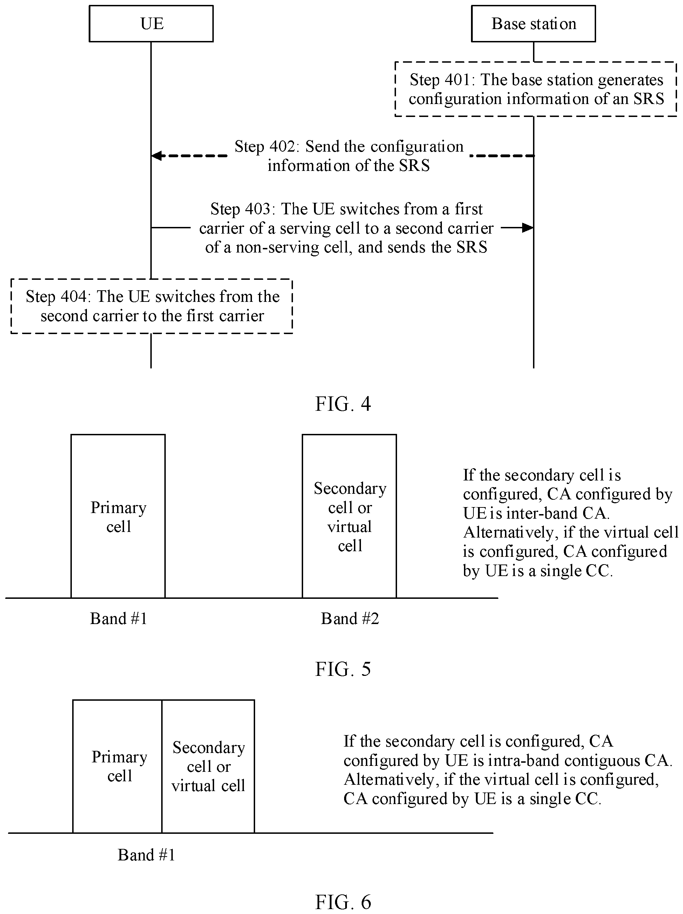

As shown in FIG. 4, a procedure of a reference signal sending and configuration method is provided, and includes at least the following steps.

Optionally, step 401: A base station generates configuration information of an SRS.

Optionally, step 402: The base station sends the configuration information of the SRS to UE, where the configuration information of the SRS is for configuring an SRS resource on a second carrier of a non-serving cell of the UE, and the configuration information of the SRS includes at least indication information of an SRS frequency. The configuration information of the SRS may be an air interface message, for example, an RRC message or a MAC message, or may be an RRC reconfiguration message, an RRC setup message, or an RRC resume message. This is not limited.

The SRS in this embodiment of this application needs to be sent on the second carrier of the non-serving cell of the UE, and is different from a positioning SRS or a communication SRS in a current solution. In the current solution, the positioning SRS or the communication SRS may be considered to be sent on a carrier of a serving cell of the UE. Therefore, a configuration of the SRS in this embodiment of this application is different from a configuration of the current positioning SRS or communication SRS. In this embodiment of this application, the following SRS configuration manners are provided.

In a design, the configuration information of the SRS is not related to a cell group configuration, or the configuration information of the SRS is not related to any cell. The cell group is described as follows: In a multi-connection scenario, the UE may maintain connections to a plurality of base stations and receive services. The plurality of base stations to which the UE maintains connections include a master node (master node, MN) and a secondary node (secondary node, SN). Optionally, a function of the master node may be stronger than that of the secondary node. For example, the UE may first maintain a connection to the master node. When a specific condition is met, for example, throughput of the UE increases, the UE may establish a connection to the secondary node. A cell group in which the master node provides air interface resources for the UE may be referred to as a master cell group (master cell group, MCG), and a cell group in which the secondary node provides air interface resources for the UE may be referred to as a secondary cell group (secondary cell group, SCG). The master cell group may include a primary cell (primary cell, PCell). When carrier aggregation (carrier aggregation, CA) is configured, the master cell group may further include at least one secondary cell (secondary cell, SCell). The secondary cell group includes a primary secondary cell (primary secondary cell, PSCell). When CA is configured, the secondary cell group may further include at least one secondary cell. The cell group in this embodiment of this application may be a master cell group, a secondary cell group, or the like. This is not limited.

For example, the cell group configuration may be a top-layer information element (information element, IE) configured for a physical layer cell in NR. It should be noted that, in a current solution, configuration information of an SRS for communication or an SRS for positioning is included in an information element of a cell group configuration. To distinguish from the foregoing description, the configuration information of the SRS in this embodiment of this application may be carried in another information element other than the information element of the cell group configuration. The another information element may be referred to as a first information element. For example, the first information element includes a mobility measurement configuration (MeasConfig) information element of the UE.

The mobility measurement configuration information element is mainly configured to configure radio resource management (radio resource management, RRM) measurement, a measurement gap, measurement reporting, and the like of the UE. Because mobility measurement of the UE is independent of a serving cell configuration of the UE, no cell group configuration needs to be configured for a mobility measurement configuration.

Using an example in which information for configuring an SRS is carried by using an RRC reconfiguration information element, a difference between a current communication or positioning SRS configuration and a positioning SRS configuration in this embodiment of this application is described:

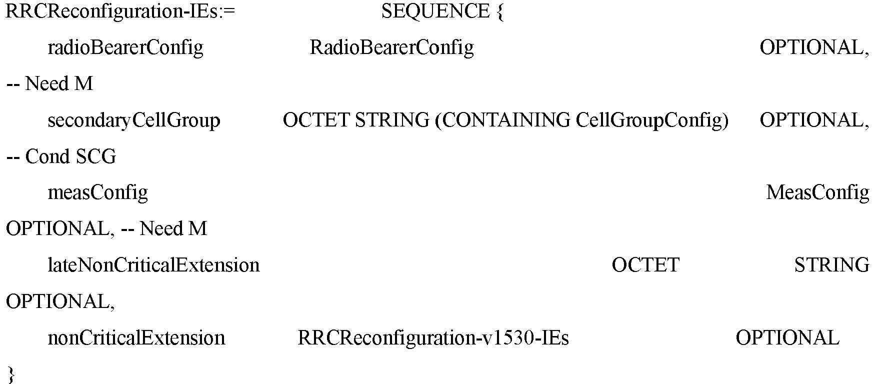

It can be learned from the foregoing RRC information element that the RRC reconfiguration information element may include a secondary cell configuration (secondaryCellGroup) information element and a mobility measurement configuration (measConfig) information element. In the current solution, configuration information of the communication SRS or the positioning SRS may be carried in a cell group configuration (CellGroupConfig) information element in the secondary cell group configuration information element. In this embodiment of this application, the positioning SRS configuration may be carried in the mobility measurement configuration information element.

In another design, the configuration information of the SRS may be related to a cell group configuration, or the configuration information of the SRS may be related to a cell. For example, the configuration information of the SRS may be carried in a second information element, and the second information element is configured to configure a virtual carrier (virtual carrier) of the UE. In this embodiment of this application, the second carrier for sending the SRS may be a virtual carrier, and the virtual carrier is in a virtual cell (virtual cell, VCell). Alternatively, the configuration information of the SRS is carried in a virtual carrier or a virtual cell of the cell group configuration. The virtual cell may be a secondary cell nominally, but has the following difference from a common secondary cell: an uplink carrier of the virtual cell, that is, a virtual carrier, is not configured with a physical uplink shared channel (physical uplink shared channel, PUSCH) and/or a physical uplink control channel (physical uplink control channel, PUCCH). No downlink carrier is configured for the virtual cell. Alternatively, a downlink carrier is configured, but the downlink carrier is not configured with a physical downlink control channel (physical downlink control channel, PDCCH) and a physical downlink shared channel (physical downlink shared channel, PDSCH). A capability of the virtual cell is irrelevant to a carrier aggregation (carrier aggregation, CA) capability of the UE. For example, in a CA band combination the virtual carrier is not counted in a quantity of carrier components carrier component, CC) on inter-band (inter-band) CA or intra-band (intra-band) CA in the CA band combination.

CA is a technology in which at least two CCs are aggregated to support a larger transmission bandwidth. To make efficient use of fragmented spectrum, CA supports aggregation of different CCs. For example, CCs for CA in a same band are referred to as intra-band CA; or CCs for CA in different bands are referred to as inter-band CA. For the intra-band CA, CCs for CA being contiguous in frequency domain is referred to as intra-band contiguous CA; or CCs for CA being non-contiguous in frequency domain is referred to as intra-band non-contiguous CA. It should be understood that a plurality of downlink CCs aggregated together are referred to as downlink CA; and a plurality of uplink CCs aggregated together are referred to as uplink CA. In the description of this embodiment of this application, if the CC is not limited, the CC may be a downlink CC or an uplink CC.

The following examples describe differences between a virtual carrier and a virtual cell in this embodiment of this application and a conventional carrier and a conventional cell.

For example, as shown in FIG. 5, if a primary cell is configured in a band (band) #1 of UE, the primary cell includes one CC. If a conventional secondary cell is configured in a band (band) #2 and the conventional secondary cell includes at least one CC, a CA configuration of the UE is inter-band CA. Alternatively, if a virtual cell is configured in the band 2 and the virtual cell includes at least one virtual carrier, a CA configuration of the UE is a single CC of the band 1.

Alternatively, as shown in FIG. 6, if a primary cell is configured in a band #1 of UE, the primary cell includes one CC. If a conventional secondary cell is configured in the band #1 of the UE, the secondary cell includes at least one CC, and CCs of the primary cell and the secondary cell are contiguous. In this case, a CA configuration of the UE is intra-band contiguous CA, and a quantity of contiguous CCs is 2. Alternatively, if a virtual cell is configured in the band #1 of the UE, a CA configuration of the UE is a single CC in the band #1.

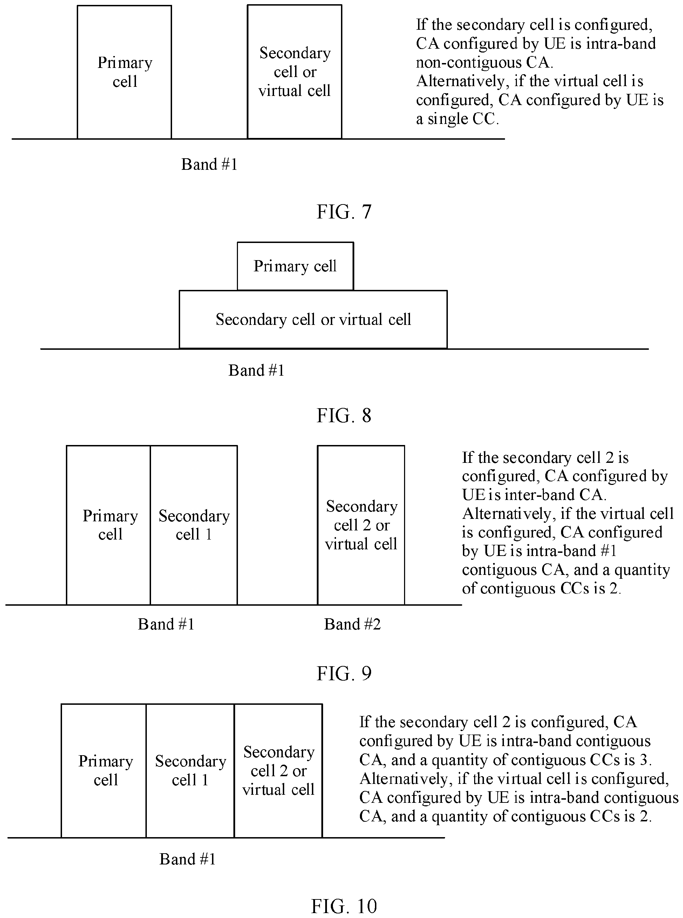

Alternatively, as shown in FIG. 7, if a primary cell is configured in a band #1 of UE, the primary cell includes one CC. If a conventional secondary cell is configured in the band #1, the conventional secondary cell includes at least one CC, and CCs of the primary cell and the secondary cell are non-contiguous. In this case, a CA configuration of the UE is intra-band non-contiguous CA. Alternatively, if a virtual cell is configured in the band #1 of the UE and the virtual cell includes at least one virtual carrier, a CA configuration of the UE is a single CC of the band #1.

Alternatively, as shown in FIG. 8, a primary cell (or a primary cell + a secondary cell) is configured in a band #1 of UE. It is specified in advance that a conventional secondary cell in the band #1 is not allowed to overlap with any primary cell or another secondary cell in frequency domain, and the overlap includes complete overlap or partial overlap. In this case, the conventional secondary cell configured in the band 1 is not allowed to overlap with any primary cell or another secondary cell in a carrier. However, a virtual carrier in a virtual cell configured in the band 1 may completely or partially overlap with a carrier of a primary cell and/or a secondary cell.

Alternatively, as shown in FIG. 9, a primary cell and a secondary cell 1 are configured in a band 1 of UE, and a CC included in the primary cell is contiguous with a CC included in the secondary cell 1. If a conventional secondary cell 2 is configured in a band 2 of the UE, a CA configuration of the UE is inter-band CA, and a CA configuration in the band 1 is intra-band contiguous CA. Alternatively, if a virtual cell is configured in the band #2 of the UE and the virtual cell includes a virtual carrier, a CA configuration of the UE is intra-band contiguous CA in the band 1.

Alternatively, as shown in FIG. 10, a primary cell and a secondary cell 1 are configured in a band #1 of UE, and one CC included in the primary cell is contiguous with one CC included in the secondary cell 1. If a conventional secondary cell 2 is further configured in the band 1, the secondary cell 2 includes one CC, and the CC is contiguous with CCs included in the secondary cell 1 and the primary cell, a CA configuration of the UE is intra-band contiguous CA, and a quantity of contiguous CCs is 3. Alternatively, if a virtual cell is further configured in the band 1 and the virtual cell includes at least one virtual carrier, regardless of whether the virtual carrier of the virtual cell is contiguous with CCs of the primary cell and the secondary cell 1, a CA configuration of the UE is intra-band contiguous CA in the band 1, and a quantity of contiguous CCs is 2.

Step 403: The UE switches from a first carrier of a first serving cell to a second carrier of a non-serving cell, and sends the SRS. Optionally, the UE may send the SRS in a broadcast or multicast manner. The base station participating in the positioning calculation may receive the SRS sent by the UE, measure the SRS sent by the UE, generate a measurement result of the SRS, and report the measurement result of the SRS to an LMF network element.

In this embodiment of this application, the UE may receive the configuration information of the SRS that is sent by the base station in the step 402. The UE obtains indication information of an SRS frequency from the configuration information of the SRS. The UE determines the second carrier based on the indication information of the SRS frequency. For example, the UE may determine a first frequency based on the indication information of the SRS frequency. The first frequency may also be referred to as a first frequency. The first frequency may be a center frequency of the second carrier, a frequency that has an offset value with a center frequency of the second carrier, or the like. This is not limited. The UE may determine the second carrier based on the first frequency. A bandwidth of the second carrier needs to be greater than or equal to a bandwidth of a configured SRS. Optionally, at least one RB in a resource block (resource block, RB) set corresponding to the SRS does not belong to an available RB set of any uplink carrier of the serving cell of the UE. For example, all RBs in the RB set corresponding to the SRS do not belong to an available RB set of any uplink carrier of the serving cell of the UE, or some RBs in the RB set corresponding to the SRS belong to an available RB set of any uplink carrier of the serving cell of the UE.

Optionally, the indication information of the SRS frequency may include at least one of the following: an absolute radio frequency channel number (absolute radio frequency channel number, ARFCN) of the SRS, a bandwidth of the second carrier, an available RB set of the second carrier, or an ARFCN of the second carrier.

In a design, the UE may determine the first frequency based on the ARFCN of the SRS. For example, the ARFCN of the SRS may indicate an ARFCN of a point A (Point A) to which the SRS resource is mapped. It should be understood that the ARFCN of the SRS Point A is generally corresponding to an ARFCN of a second carrier Point A. For a definition of Point A, refer to TS 38.211. For example, the Point A is used to determine a common reference point of a resource block grid, and is a center of a sub-carrier 0 corresponding to all sub-carrier spaces on a carrier of a base station or UE, that is, a boundary of a common RB #0 corresponding to all sub-carrier spaces. After obtaining the ARFCN of the Point A, the UE may determine an offset between the first RB of the SRS resource and the Point A based on information provided from the configuration information of the SRS. Because the Point A is corresponding to the sub-carrier #0 of the common resource block (common resource block, CRB) #0, the offset may be understood as a common resource block (common resource block, CRB) CRB number of a start RB of the SRS resource. In addition, a bandwidth of the SRS is determined based on the information provided from the SRS configuration, to determine a frequency range occupied by the SRS resource. The first frequency and a transmit bandwidth are further determined based on the frequency range occupied by the SRS resource. The transmit bandwidth may be a bandwidth of the second carrier, or the transmit bandwidth is related to a capability of the UE. The transmit bandwidth should include at least the bandwidth of the second carrier. Using the first frequency as a center, the UE ensures that a transmit bandwidth range with the first frequency as a center includes the frequency range occupied by the SRS resource. Optionally, the transmit bandwidth that is of the UE and that uses the first frequency as a center may be considered as the second carrier.

For example, if an ARFCN of the Point A received by the UE is 600000, the UE determines that a frequency of the Point A is 3000 MHz and a frequency of a sub-carrier #0 of a CRB #0 corresponding to the SRS resource is 3000 MHz. In addition, the SRS configuration provides a start RB of the SRS of a CRB #1, a sub-carrier space of 30 kHz, and a bandwidth of the SRS of 100 RBs, that is, a CRB range occupied by the SRS is a CRB #1, a CRB #2, ..., and a CRB #100. In this case, it is determined that a frequency corresponding to a lowest RB of the SRS is 3000 MHz + 360 kHz, and a frequency corresponding to a highest RB of the SRS is 3000 MHz + 3636 MHz. When determining the first frequency and the transmit bandwidth, the UE may have, for example, the following selections:
- The first frequency is 3020 MHz, and the bandwidth is 40 MHz. To be specific, a transmit frequency range of the UE is 3000 MHz to 3040 MHz (where the transmit frequency range of the UE may be considered as a frequency range of the second carrier), including an SRS frequency range of 3000 MHz + 360 kHz to 3000 MHz + 36.36 MHz.
- The first frequency is 3040 MHz, and the bandwidth is 80 MHz. To be specific, a transmit frequency range of the UE is 3000 MHz to 3080 MHz (where the transmit frequency range of the UE may be considered as a frequency range of the second carrier), including an SRS frequency range of 3000 MHz + 360 kHz to 3000 MHz + 36.36 MHz.

In another design, the UE may determine the first frequency and the transmit bandwidth (that is, the second carrier) based on the bandwidth of the second carrier and the ARFCN of the second carrier, to ensure that a transmit bandwidth range with the first frequency as a center includes the frequency range occupied by the SRS resource, and ensure that a UE spectrum emission mask (spectrum emission mask, SEM) and an adjacent channel leakage ratio (adjacent channel leakage ratio, ACLR) on the second carrier are met when the UE sends the SRS. The ARFCN of the second carrier describes a radio frequency reference frequency of the second carrier, that is, a center frequency of the second carrier. For the radio frequency reference frequency, refer to the definition in TS 38.101-1/38.101-2/38.104. For a definition of the SEM of the UE on the second carrier, refer to Table 6.5.2.2-1 in TS 38.101-1 and Table 6.5.2.1-1 in TS 38.101-2. For a definition of the ACLR, refer to Section 6.5.2.4 in TS 38.101-1 and Section 6.5.2.3 in TS 38.101-2.

Information of a bandwidth of the second carrier and an absolute frequency of the second carrier needs to be determined to determine the SEM and the ACLR. For example:
- If the bandwidth of the second carrier is 100 MHz and the absolute frequency is 3000 MHz, a frequency range of the second carrier is 2950 MHz to 3050 MHz. Regardless of the RB of the SRS actually sent by the UE at which frequency in 2950 MHz to 3050 MHz, the UE needs to meet the following SEM requirements:
   ■ The radiated power within each 30 kHz bandwidth in 3050 MHz to 3051 MHz / 2949 MHz to 2950 MHz is less than -24 dBm.
   ■ The radiated power within each 1 MHz bandwidth in 3051 MHz to 3055 MHz / 2945 MHz to 2949 MHz is less than -10 dBm.
   ■ The radiated power within each 1 MHz bandwidth in 3055 MHz to 3150 MHz / 2850 MHz to 2945 MHz is less than -13 dBm.
   ■ The radiated power within each 1 MHz bandwidth in 3150 MHz to 3155 MHz / 2845 MHz to 2850 MHz is less than-25 dBm.

For details about the ACLR requirements that the UE needs to meet, refer to corresponding sections in TS 38.101-1 and TS 38.101-2.
- If the bandwidth of the second carrier is 40 MHz and the absolute frequency is 3000 MHz, a frequency range of the second carrier is 2980 MHz to 3020 MHz. Regardless of the RB of the SRS actually sent by the UE at which frequency in 2980 MHz to 3020 MHz, the UE needs to meet the following SEM requirements:
   ■ The radiated power within each 30 kHz bandwidth in 3020 MHz to 3021 MHz / 2979 MHz to 2980 MHz is less than -13 dBm.
   ■ The radiated power within each 1 MHz bandwidth in 3021 MHz to 3025 MHz / 2975 MHz to 2979 MHz is less than -10 dBm.
   ■ The radiated power within each 1 MHz bandwidth in 3025 MHz to 3060 MHz / 2940 MHz to 2975 MHz is less than -13 dBm.
   ■ The radiated power within each 1 MHz bandwidth in 3060 MHz to 3065 MHz / 2935 MHz to 2940 MHz is less than -25 dBm.

For details about the ACLR requirements that the UE needs to meet, refer to corresponding sections in TS 38.101-1 and TS 38.101-2.

In another design, the UE may determine the first frequency and the transmit bandwidth (that is, the second carrier) based on the available RB set of the second carrier or the ARFCN of the second carrier, to ensure that a transmit bandwidth range with the first frequency as a center includes the frequency range occupied by the SRS resource, and ensure that a SEM and an ACLR on the second carrier are met when the UE sends the SRS. It should be understood that the available RB set of the second carrier may include available RB sets in a plurality of sub-carrier spaces, and at least one of the plurality of sub-carrier spaces is a sub-carrier space of the SRS. For example, the available RB set of the second carrier includes an available RB set in a 15 kHz sub-carrier space and an available RB set in a 30 kHz sub-carrier space, and a sub-carrier space of the SRS is 30 kHz. The available RB set may be defined in a form of a CRB index defined by using the Point A of the second carrier (that is, the ARFCN information of the SRS) as a reference point. For example, an available RB set in a 30 kHz sub-carrier space is a CRB #1 to a CRB #272. The UE may determine the bandwidth (MHz) of the second carrier based on a maximum transmission bandwidth configuration defined in TS 38.101-1 and TS 38.101-2. For other processes, refer to the foregoing descriptions.

In another design, the UE may determine the first frequency based on the ARFCN of the second carrier. For example, the ARFCN of the second carrier describes a radio frequency reference frequency of the second carrier, that is, a center frequency of the second carrier. For the radio frequency reference frequency, refer to the definition in TS 38.101-1/38.101-2/38.104. The UE may choose to set the first frequency as a frequency corresponding to the ARFCN of the second carrier, and determine an appropriate transmit bandwidth, to ensure that a transmit bandwidth range with the first frequency as a center includes the frequency range occupied by the SRS resource.

In this embodiment of this application, before the UE sends the SRS, assuming that the UE works in the first serving cell, the UE may interrupt communication on the first carrier of the first serving cell, and switch a radio frequency operating frequency of the UE from a radio frequency of the first carrier to a radio frequency of the second carrier, where the radio frequency of the second carrier may be the foregoing first frequency.

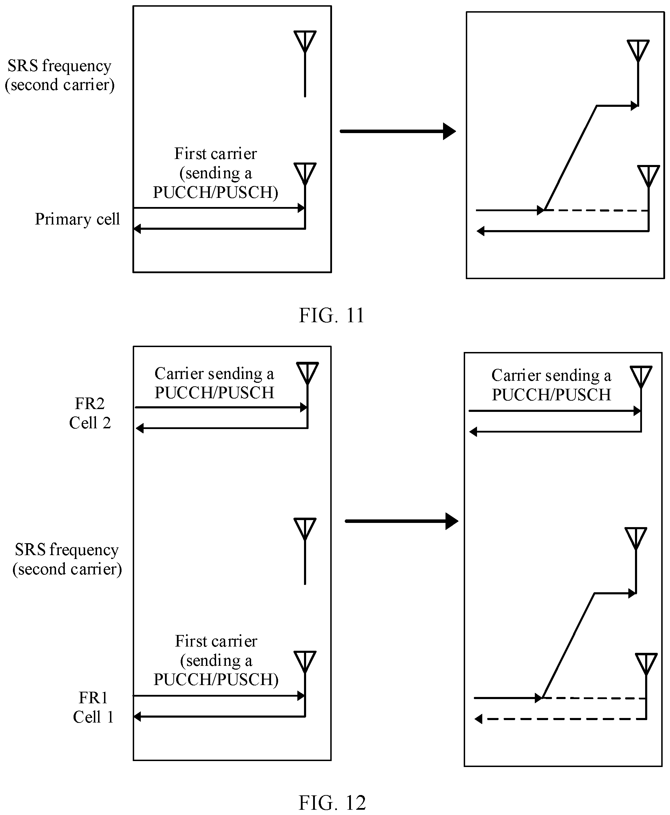

For example, as shown in FIG. 11, if the first serving cell in which the UE works is a primary cell, the UE may interrupt communication on the first carrier in the primary cell, switch one or more radio frequency channels in the first carrier to an SRS frequency (that is, the second carrier), and send the SRS.

Optionally, in this embodiment of this application, the step 403 may be further described as follows: The UE determines the first frequency based on the indication information of the SRS frequency that is carried in the configuration information of the SRS. For a specific process, refer to the foregoing description. The UE switches from the first carrier of the first serving cell to the first frequency. The UE sends the SRS by using the first frequency as a center. A bandwidth for sending the SRS may be a bandwidth of the second carrier. At least one RB in an RB set corresponding to the SRS does not belong to an available RB set of any uplink carrier of the serving cell of the UE. Optionally, a process in which the UE switches from the first carrier of the first serving cell to the first frequency may include that: the UE interrupts communication on the first carrier; and the UE switches the radio frequency operating frequency of the UE from the radio frequency of the first carrier to the first frequency.

In a design, to facilitate the UE to send the SRS, the base station may configure a measurement gap (measurement gap, MG) for the UE. For example, the UE may receive configuration information of a measurement gap from the base station. The measurement gap is a time range in which the SRS is allowed to be sent. In an optional design, the measurement gap may alternatively be understood as a time window in which the SRS is allowed to be sent. Specifically, the UE may jump out of a current operating frequency in the measurement gap, that is, interrupt communication on the first carrier, switch the radio frequency operating frequency of the UE from the radio frequency of the first carrier of the primary cell to the radio frequency of the second carrier, and send the SRS.

Optionally, the measurement gap may be a time domain concept. Specified by an existing protocol, the UE mainly performs two things in the measurement gap: radio frequency switching and downlink measurement. In this embodiment of this application, the UE may further send the SRS in the measurement gap. Optionally, in the measurement gap, the base station may not schedule the UE to send and/or receive data. The UE may not measure channel state information (channel state information, CSI), or may not feed back uplink control information (uplink control information, UCI).

In a possible implementation, the measurement gap may be a frequency range-level measurement gap. For example, the measurement gap may be a measurement gap of a first frequency range (frequency range, FR), or may be referred to as a measurement gap associated with the first frequency range. In the measurement gap, the UE may interrupt communication of all cells in the first frequency range, switch one or more radio frequency channels in the first frequency range to the second carrier, and send the SRS on the second carrier. The first frequency range may be FR1 or FR2. Optionally, in an NR protocol, frequencies for 5G communication are classified into FR1 and FR2 based on a range of the frequencies. FR1 corresponds to a low frequency band ranging from 450 MHz to 6000 MHz. FR2 corresponds to a high frequency band ranging from 24250 MHz to 52600 MHz. Optionally, channel bandwidths of different frequency ranges may be different. Due to abundant resources of a high frequency band, a channel bandwidth of the high frequency band is usually large.

For example, as shown in FIG. 12, if the UE supports interrupting communication of all cells in a frequency range in a measurement gap, the UE switches one or more radio frequency channels in the frequency range to a second carrier, and sends an SRS on the second carrier. Using FR1 as an example, the base station may configure a measurement gap of the FR1 for the UE. The FR1 includes a second carrier for sending an SRS. In this case, the UE may interrupt communication of all cells in the FR1 in the measurement gap. For example, receiving and sending of a physical layer data channel and a control channel (for example, a PDCCH, a PDSCH, a PUSCH, or a PUCCH) that are associated with the FR1, and some physical layer signals (for example, a CSI-RS) may be interrupted. Optionally, in the FR1, the UE may receive a mobility measurement signal (for example, an SSB, RRM, or a CSI-RS) and send an SRS. In this embodiment of this application, the UE switches one or more radio frequency channels in the FR1 to the second carrier in the measurement gap. The second carrier may also be referred to as an SRS frequency. The SRS is sent on the second carrier. Communication of cells in FR2 is not affected.

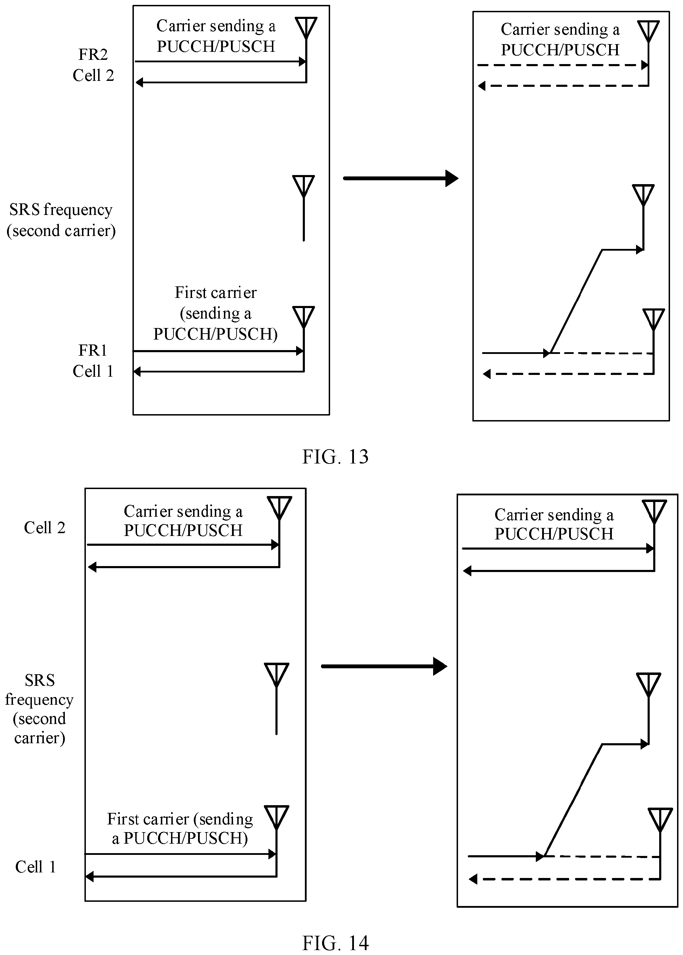

Alternatively, the measurement gap is a measurement gap of UE, or is referred to as a UE-level measurement gap. In the measurement gap, the UE interrupts communication of all cells, switches one or more radio frequency channels of the UE to an SRS frequency, that is, a second carrier, and sends an SRS on the second carrier. As shown in FIG. 13, the UE interrupts communication of cells in all frequency ranges, including communication of cells in FR1 and communication of cells in FR2. One or more radio frequency channels in the FR1 or the FR2 are switched to an SRS frequency, that is, a second carrier, and the SRS is sent on the second carrier.

In the foregoing design, a measurement gap is preconfigured for the UE. In the measurement gap, the UE may interrupt communication of a current serving cell on a first carrier, switch one or more radio frequency channels of the first carrier to a second carrier, and send the SRS on the second carrier.

In another design, the UE may receive first indication information from the base station. The first indication information indicates the UE to interrupt communication on the first carrier or interrupt communication on a first frequency band that includes the first carrier. When receiving the first indication information, the UE may interrupt communication on the first carrier or on the first frequency band. One or more radio frequency channels in the first carrier or the first frequency band are switched to the second carrier, and the SRS is sent on the second carrier. Optionally, in this solution, the base station may no longer configure a measurement gap for the UE.

For example, as shown in FIG. 14, the base station indicates that the first carrier that may be interrupted by the UE is in a cell 1. Before the UE sends the SRS, the UE may interrupt communication on the first carrier in the cell 1, switch one or more radio frequency channels of the first carrier in the cell 1 to an SRS frequency, that is, a second carrier, and send the SRS on the second carrier. Communication of a cell 2 of the UE is not affected.

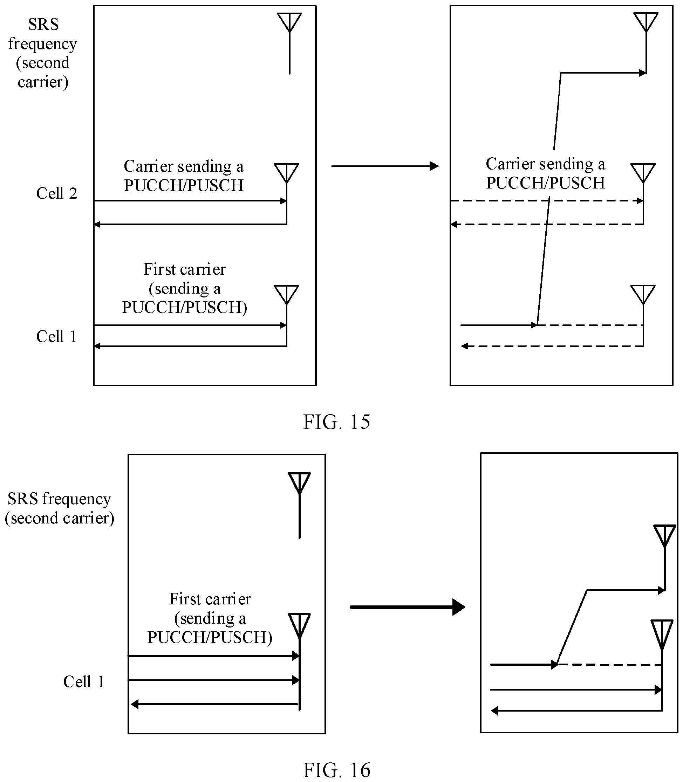

Alternatively, the UE may interrupt communication on a frequency band to which the first carrier belongs. As shown in FIG. 15, a cell 1 and a cell 2 belong to a same frequency band, and the cell 1 includes a first carrier. The base station instructs the UE to interrupt the first carrier. Before sending the SRS, the UE may interrupt communication on a frequency band to which the first frequency belongs, including interrupting communication of the cell 1 and the cell 2, and switch one or more radio frequency channels in the first carrier to an SRS frequency, that is, a second carrier. In this case, communication of the cell 2 is also affected.

Alternatively, in the first carrier or the frequency band including the first carrier, other than the switched radio frequency channel for sending the SRS, another radio frequency channel is not affected and continues to maintain communication. As shown in FIG. 16, a cell 1 of the UE includes the interrupted first carrier. Before sending the SRS, the UE switches one or more radio frequency channels in the first carrier of the cell 1 to an SRS frequency, that is, a second carrier, and sends the SRS on the second carrier. Communication of another radio frequency channel in the cell 1 is not affected.

In the foregoing design, the serving base station may indicate, to the UE, the first carrier or the first frequency band that can be interrupted. When receiving the indication, the UE may interrupt communication on a corresponding carrier or frequency band, switch a corresponding radio frequency channel to the second carrier, and send the SRS on the second carrier.

It should be noted that carrier switching in this embodiment of this application usually affects a transmit channel of the UE, and whether carrier switching affects a receive channel is not limited. For example, in a frequency division duplexing (frequency division duplexing, FDD) scenario, an uplink carrier and a downlink carrier may be configured for a serving cell. One or more radio frequency channels in the uplink carrier are switched to a second carrier, and an SRS is sent on the second carrier. Communication on the downlink carrier in the cell may not be affected, and downlink communication may be normally performed on the downlink carrier in the cell. In a time division duplexing (time division duplexing, TDD) scenario, a serving cell may be configured with one carrier, and the carrier may be used for both uplink and downlink. One or more radio frequency channels in the carrier are switched to a second carrier, and an SRS is sent on the second carrier. Downlink reception of the cell may also be affected. In this embodiment of this application, the first carrier and the second carrier may be normal uplink (normal uplink, NUL) carriers, supplementary uplink (supplementary uplink, SUL) carriers, or the like. This is not limited.

Optionally, step 404: After the UE sends the SRS, the UE switches from the second carrier to the first carrier. For example, after sending the SRS, the UE may switch the radio frequency channel from the second carrier back to the first carrier, to restore communication on the first carrier. For example, receiving and sending of a physical layer data channel and a control channel on the first carrier, and some physical layer signals are restored, which is not limited.

In this embodiment of this application, as the UE has no corresponding downlink carrier at an SRS sending frequency, that is, the second carrier, the UE may determine transmit power of the SRS based on a downlink reference signal of any serving cell. For example, the UE may use an SSB of a master information block (master information block, MIB) of a primary cell as a path loss reference signal, perform open-loop power adjustment, and determine the transmit power of the SRS.

In this embodiment of this application, as the UE does not perform uplink synchronization at an SRS frequency, that is, the second carrier, to ensure uplink synchronization between the UE and the base station, the UE may determine an uplink timing advance (timing advance, TA) value of the SRS based on an uplink TA value of any serving cell. For example, the UE may use a TA value of the primary cell as the uplink TA value of the SRS.

According to the method in this embodiment of this application, the UE may send, on the second carrier of the non-serving cell, the SRS for positioning, so that a communication bandwidth of the UE is decoupled from a positioning bandwidth. For example, the UE sends the SRS in a large bandwidth and performs communication in a small bandwidth, to meet a requirement of loT-type UE.

### Embodiment 2

This application further provides a communication method. According to the communication method, UE may report a capability message of the UE to a base station.

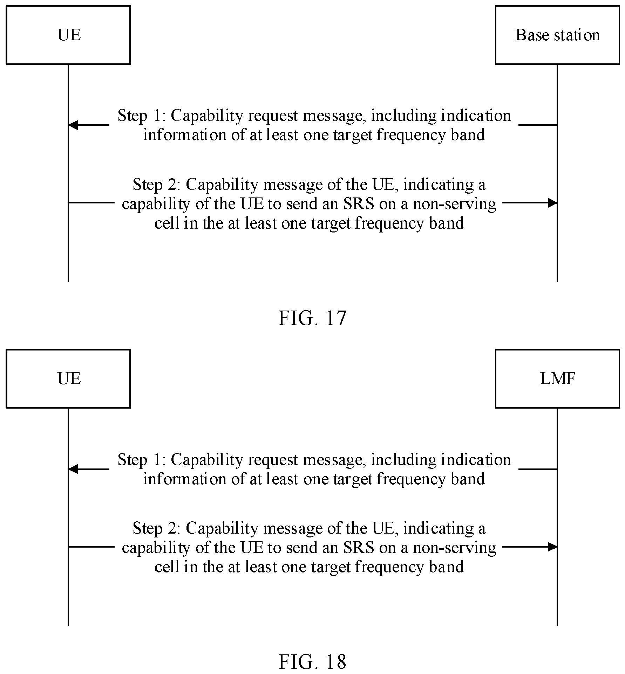

As shown in FIG. 17, a procedure of a communication method is provided, and includes at least the following steps:
Step 1701: The UE receives a capability request message from the base station, where the capability request message includes indication information of at least one target frequency band.

In a design, the capability request message may include a frequency band filter. The frequency band filter may also be referred to as a frequency band filter for SRS carrier switching of a non-serving cell. The frequency band filter includes at least one target frequency band. Each target frequency band is a frequency band that is configured by the base station and that can be used by the UE to perform SRS carrier switching of a non-serving cell. The frequency band filter is different from a frequency band filter for communication. For example, if there is no communication service but only a positioning service on a frequency band 1, the base station may add the frequency band 1 to the frequency band filter for SRS carrier switching of the non-serving cell, and does not add the frequency band 1 to the frequency band filter for communication. Alternatively, the frequency band filter for SRS carrier switching of the non-serving cell in this embodiment of this application may be a subset of the frequency band filter for communication, indicating that the base station may use some frequency bands that support communication for SRS carrier switching of the non-serving cell. It should be understood that a frequency band may be allocated to both SRS carrier switching of a non-serving cell and communication of the UE. In this case, the UE may perform intra-frequency band switching. The frequency band corresponds to one set of radio frequency apparatuses, and the UE may complete communication and positioning by using the set of radio frequency apparatuses, thereby reducing UE costs. For example, the frequency band 1 may be configured for both SRS carrier switching of a non-serving cell and UE communication. The frequency band 1 includes a first carrier and a second carrier. The first carrier is a carrier of a first serving cell of the UE and is used for communication. The second carrier is a carrier of a non-serving cell and is used for sending an SRS. Then, the UE may interrupt communication on the first carrier, switch one or more radio frequency channels in the first carrier to the second carrier, and send the SRS on the second carrier. It can be learned that the UE may complete communication and positioning by using a set of radio frequency apparatuses corresponding to the frequency band 1, thereby reducing UE costs.

Step 1702: The UE sends a capability message of the UE to the base station, where the capability message of the UE indicates a capability of the UE to send an SRS on a carrier of a non-serving cell in the at least one target frequency band. In a possible design, the capability message of the UE indicates at least one of the following:
1. Switching time for the UE to switch from a source frequency band to a target frequency band. The source frequency band may be a frequency band in which a current primary cell of the UE is located, or may be at least one source frequency band in a list of source frequency bands that are provided by the UE and that support switching. The switching time may include a time for switching from any configured source cell downlink to an SRS frequency and a time for switching from the SRS frequency to the source cell downlink in the source frequency band, and a time for switching from any configured source cell uplink to an SRS frequency and a time for switching from the SRS frequency to the source cell uplink in the source frequency band. 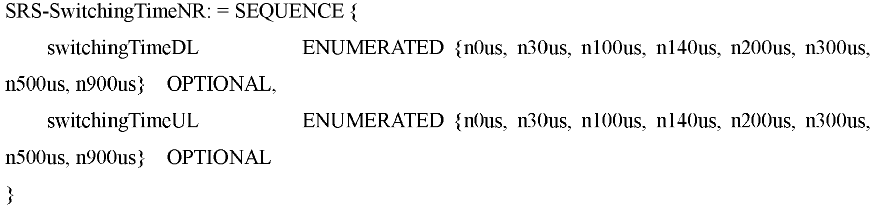 For example, as shown above, an information element of an SRS switching time includes two sub-fields (field), which are respectively a switching time downlink (switchingTimeDL) sub-field, indicating a time when the UE switches from source cell downlink to an SRS frequency and a time when the UE switches from the SRS frequency to the source cell downlink, and a switching time uplink (switchingTimeUL) sub-field, indicating a time when the UE switches from source cell uplink to an SRS frequency and a time when the UE switches from the SRS frequency to the source cell uplink.
2. Parameter of an SRS resource configured on the target frequency band, which may include a quantity of configured SRS resource sets, a quantity of configured SRS resources, a quantity of SRS resources in a slot, whether a semi-persistent SRS is supported, whether an aperiodic SRS is supported, a quantity of SRS ports, or the like.
3. Whether a carrier of the source frequency band supports partial switching. For example, one source frequency band may include a plurality of uplink carriers. In a carrier switching process, it indicates whether the source frequency band supports switching of some carriers in the source frequency band to an SRS frequency, and another carrier in the source frequency band can perform normal communication. If the source frequency band supports switching of some carriers in the source frequency band to an SRS frequency, communication of another carrier in the source frequency band is not affected. Alternatively, if the source frequency band does not support switching of some carriers in the source frequency band to an SRS frequency, all communication in the source frequency band may be interrupted in a carrier switching process.
4. Whether a carrier of the source frequency band supports partial radio frequency channel switching. For example, one source frequency band may include one or more uplink carriers, and each carrier supports sending of a plurality of radio frequency channels. In a carrier switching process, it indicates whether the source frequency band supports using some radio frequency channels in the plurality of radio frequency channels of each uplink carrier in the source frequency band for switching to send an SRS, and another radio frequency channel is not affected. It should be understood that when the UE performs SRS switching and sending, communication on the source frequency band may not be interrupted, but a communication capability may be affected. For example, an uplink multi-input multi-output (multi-input multi-output, MIMO) capability may be reduced.
5. Parameters such as a sub-carrier space (sub-carrier space, SCS) and a bandwidth of an SRS supported on the target frequency band. It should be noted that, in this embodiment of this application, the SRS is an SRS for positioning, and a bandwidth of the SRS may be inconsistent with a communication bandwidth supported by the UE. For example, a bandwidth of the SRS for positioning may be greater than a communication bandwidth of the UE, to meet requirements of large bandwidth and high-precision positioning.
6. Information about one or more target frequency bands, and/or information, for each target frequency band, about a source frequency band that supports switching to the target frequency band.

In this embodiment of this application, the base station indicates, to the UE, a frequency band (that is, a target frequency band) that is configured by the base station and on which SRS carrier switching of a non-serving cell can be performed, and the UE reports, to the base station, a capability of sending an SRS in a non-serving cell of each target frequency band. Then, the base station may determine an SRS configuration based on the capability of the SRS reported by the UE, and indicate the SRS configuration to the UE.

It should be noted that the method provided in Embodiment 2 may be used independently, or may be combined with the method provided in Embodiment 1. For example, by using the method provided in Embodiment 2, the UE reports capability information of the SRS to the base station, and the base station may determine configuration information of the SRS based on the capability information of the SRS reported by the UE. By using the method in Embodiment 1, configuration information of the SRS is sent to the UE, and the UE sends the SRS based on the configuration, to complete positioning of the UE.

### Embodiment 3

Embodiment 3 of this application further provides a communication method. A difference from Embodiment 2 lies in that Embodiment 2 describes in detail a process of exchanging an SRS capability between UE and a base station; and however, this embodiment of this application describes in detail a process of exchanging an SRS capability between UE and an LMF.

As shown in FIG. 18, a procedure of a communication method is provided, and includes at least the following steps:
Step 1801: The UE receives a capability request message from the LMF, where the capability request message includes indication information of at least one target frequency band.
Step 1802: The UE sends a capability message of the UE to the LMF, where the capability message indicates a capability of the UE to send an SRS on a carrier of a non-serving cell in the target frequency band.

Optionally, for the capability request message in the step 1801 and the capability message reported by the UE in the step 1802, refer to the description in Embodiment 2. In this embodiment of this application, exchange between the UE and the LMF may be forwarded by a base station and an AMF. For example, the capability request message sent by the LMF in the step 1801 may be forwarded by the AMF and the base station to the UE. The capability message sent by the UE in the step 1802 may be forwarded by the base station and the AMF to the LMF.

According to the foregoing method, the LMF may obtain a capability of sending an SRS by the UE on a carrier of a non-serving cell, and the LMF may request, based on the obtained SRS capability, an SRS on an appropriate frequency band from the base station for positioning.

It may be understood that in embodiments of this application, a terminal device, an access network device, or an LMF network element may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

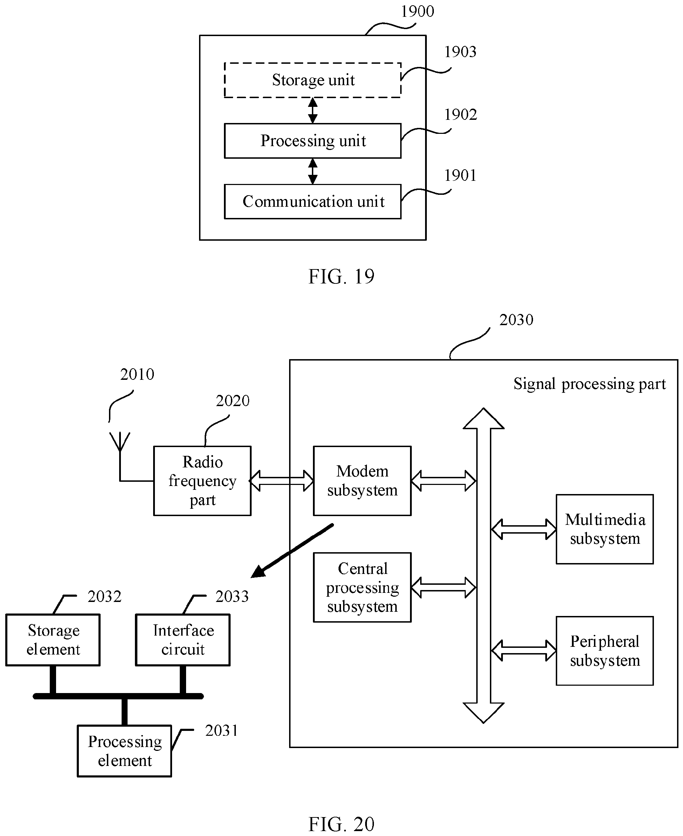

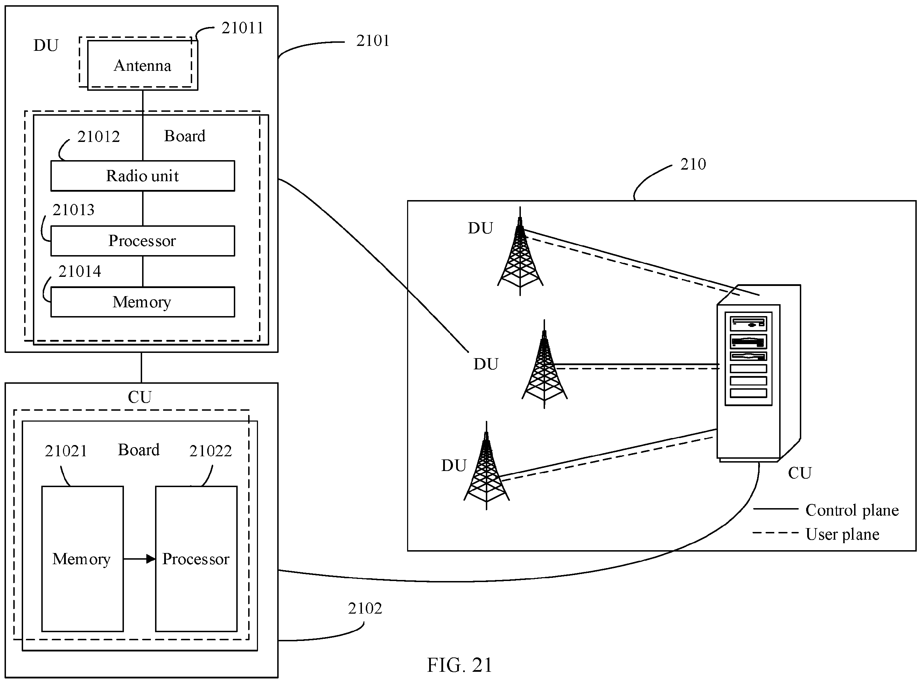

The foregoing describes in detail the methods provided in embodiments of this application with reference to FIG. 1 to FIG. 18. The following describes in detail apparatuses provided in embodiments of this application with reference to FIG. 19 and FIG. 21. It should be understood that the description of the apparatus embodiments corresponds to the description of the method embodiments. Therefore, for content not described in detail, refer to the description in the foregoing method embodiments.

FIG. 19 is a possible block diagram of an apparatus according to an embodiment of this application. As shown in FIG. 19, an apparatus 1900 may include a communication unit 1901 configured to support the apparatus 1900 to be in communication with another device. Optionally, the communication unit 1901 is also referred to as a transceiver unit, and may include a receiving unit and/or a sending unit, respectively configured to perform a receiving operation and a sending operation. A processing unit 1902 is configured to support the apparatus in processing. Optionally, the apparatus 1900 may further include a storage unit 1903 configured to store program code and/or data of the apparatus 1900.

In a first embodiment, the apparatus 1900 may be a terminal device or a module, a chip, or a circuit in a terminal device. The communication unit 1901 is configured to perform sending and receiving operations of the terminal device in the foregoing method embodiments. The processing unit 1902 is configured to perform processing operations of the terminal device in the foregoing method embodiments.

For example, the processing unit 1902 is configured to switch from a first carrier of a serving cell to a second carrier of a non-serving cell; and the communication unit 1901 is configured to send a sounding reference signal SRS by using the second carrier.

In a possible design, the communication unit 1901 is further configured to: receive configuration information of the SRS from an access network device, where the configuration information of the SRS includes at least indication information of an SRS frequency; and the processing unit 1902 is further configured to: determine the second carrier based on the indication information of the SRS frequency.

In a possible design, the indication information of the SRS frequency includes at least one of the following: an absolute radio frequency channel number ARFCN of the SRS, a bandwidth of the second carrier, an available resource block RB set of the second carrier, or an ARFCN of the second carrier.

In a possible design, the configuration information of the SRS is not related to a cell group configuration. For example, the configuration information of the SRS is carried in a first information element, and the first information element includes a mobility measurement configuration information element of the terminal device.

In a possible design, the configuration information of the SRS is related to a cell group configuration. For example, the configuration information of the SRS is carried in a second information element, the second information element is configured to configure a virtual carrier of the terminal device, and the second carrier is the virtual carrier.

In a possible design, the switching from a first carrier of a serving cell to a second carrier of a non-serving cell includes: interrupting communication on the first carrier; and switching a radio frequency operating frequency of a terminal device from a radio frequency of the first carrier to a radio frequency of the second carrier.

In a possible design, the communication unit 1901 is further configured to: receive configuration information of a measurement gap from the access network device, where the measurement gap is a time range in which the SRS is allowed to be sent; and when switching from the first carrier of the serving cell to the second carrier of the non-serving cell, the processing unit 1902 is specifically configured to: perform, by the terminal device in the measurement gap, the steps of interrupting communication on the first carrier and switching a radio frequency operating frequency of the terminal device from a radio frequency of the first carrier to a radio frequency of the second carrier.

In a possible design, the measurement gap is a measurement gap in a first frequency range, and the interrupting communication on the first carrier includes: interrupting, in the measurement gap, communication of a serving cell included in the first frequency range.

In a possible design, the measurement interval is a measurement gap of the terminal device, and the interrupting communication on the first carrier includes: interrupting communication of all serving cells in the measurement gap.

In a possible design, the communication unit 1901 is further configured to: receive first indication information from the access network device, where the first indication information indicates the terminal device to interrupt communication on the first carrier or interrupt communication on a first frequency band that includes the first carrier; and interrupt communication on the first carrier or on the first frequency band before sending the SRS.

In a possible design, the processing unit 1902 is further configured to determine an uplink timing advance TA value of the SRS based on an uplink TA value of a second serving cell.

In a possible design, the processing unit 1902 is further configured to determine transmit power of the SRS based on a downlink reference signal of a third serving cell.

In a possible design, the processing unit 1902 is further configured to switch from the second carrier to the first carrier after the terminal device sends the SRS.

In a possible design, the communication unit 1901 is further configured to receive a capability request message from the access network device or a core network device, where the capability request message includes indication information of at least one target frequency band; and the communication unit 1901 is further configured to: send a capability message of the terminal device to the access network device or the core network device, where the capability message of the terminal device indicates a capability of the terminal device to send the SRS on a carrier of a non-serving cell in the target frequency band.

In a possible design, the capability message of the terminal device indicates at least one of the following: a switching time for the terminal device to switch from a source frequency band to a target frequency band, a parameter of an SRS resource configured on the target frequency band, whether a carrier of the source frequency band supports partial switching, whether a carrier of the source frequency band supports partial radio frequency channel switching, a sub-carrier space of an SRS supported on the target frequency band, a bandwidth of an SRS supported on the target frequency band, information about one or more target frequency bands, or information, for each target frequency band, about a source frequency band that supports switching to the target frequency band.

In a second embodiment, the apparatus 1900 may be an access network device or a module, a chip, or a circuit in an access network device. The communication unit 1901 is configured to perform sending and receiving operations of the access network device in the foregoing method embodiments. The processing unit 1902 is configured to perform processing operations of the access network device in the foregoing method embodiments.

For example, the processing unit 1902 is configured to generate configuration information of a sounding reference signal SRS; and the communication unit 1901 is configured to send the configuration information of the SRS to a terminal device, where the configuration information of the SRS is on a second carrier of a non-serving cell of the terminal device, and the configuration information of the SRS includes at least indication information of an SRS frequency.

In a possible design, the indication information of the SRS frequency includes at least one of the following: an absolute radio frequency channel number ARFCN of the SRS, a bandwidth of the second carrier, an available resource block RB set of the second carrier, or an ARFCN of the second carrier.

In a possible design, the configuration information of the SRS is not related to a cell group configuration. For example, the configuration information of the SRS is carried in a first information element, and the first information element includes a mobility measurement configuration information element of the terminal device.

In a possible design, the configuration information of the SRS may be related to a cell group configuration. For example, the configuration information of the SRS may be carried in a second information element, the second information element is configured to configure a virtual carrier of the terminal device, and the second carrier is the virtual carrier.

In a possible design, the communication unit 1901 is further configured to receive the SRS from the terminal device on the second carrier.

In a possible design, the communication unit 1901 is further configured to send configuration information of a measurement gap to the terminal device, where the measurement gap is a time range in which the SRS is allowed to be sent.

In a possible design, the measurement gap is a measurement gap in a first frequency range or a measurement gap of the terminal device.

In a possible design, the communication unit 1901 is further configured to send first indication information to the terminal device, where the first indication information indicates the terminal device to interrupt communication on the first carrier or interrupt communication on a first frequency band that includes the first carrier.

In a possible design, the communication unit 1901 is further configured to send a capability request message to the terminal device, where the capability request message includes indication information of at least one target frequency band; and the communication unit 1901 is further configured to receive a capability message from the terminal device, where the capability message of the terminal device indicates a capability of the terminal device to send the SRS on a non-serving cell in a target frequency band.

In a possible design, the capability message of the terminal device indicates at least one of the following: a switching time for the terminal device to switch from a source frequency band to a target frequency band, a parameter of an SRS configured on the target frequency band, whether a carrier of the source frequency band supports partial switching, whether a carrier of the source frequency band supports partial radio frequency channel switching, a sub-carrier space of an SRS supported on the target frequency band, a bandwidth of an SRS supported on the target frequency band, information about one or more target frequency bands, or information, for each target frequency band, about a source frequency band that supports switching to the target frequency band.

It should be understood that division into units in the apparatus is merely logical function division. During actual implementation, all or some of the units may be integrated into one physical entity or may be physically separated. In addition, all the units in the apparatus may be implemented in a form in which a processing element calls software, or may be implemented in a form of hardware; or some units may be implemented in a form in which a processing element calls software, and some units are implemented in a form of hardware. For example, each unit may be a separately disposed processing element, or may be integrated into a chip of the apparatus for implementation. In addition, each unit may alternatively be stored in a memory in a form of a program to be called by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processing element, or may be implemented in a form in which the processing element calls software.

In an example, the unit in any one of the foregoing apparatuses may be one or more integrated circuits configured to implement the foregoing method, for example, one or more application-specific integrated circuits (application-specific integrated circuit, ASIC), or one or more microprocessors (digital signal processor, DSP), or one or more field-programmable gate arrays (field-programmable gate array, FPGA), or a combination of at least two of these integrated circuit forms. In another example, when the units in the apparatus may be implemented in a form in which a processing element schedules a program, the processing element may be a processor, for example, a general-purpose central processing unit (central processing unit, CPU) or another processor that can call the program. In still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

FIG. 20 is a schematic diagram of a structure of a terminal device according to an embodiment of this application. As shown in FIG. 20, the terminal device includes an antenna 2010, a radio frequency part 2020, and a signal processing part 2030. The antenna 2010 is connected to the radio frequency part 2020. In a downlink direction, the radio frequency part 2020 receives, through the antenna 2010, information sent by an access network device, and sends, to the signal processing part 2030 for processing, the information sent by the access network device. In an uplink direction, the signal processing part 2030 processes information of the terminal device and sends the processed information to the radio frequency part 2020; and the radio frequency part 2020 processes the information of the terminal device and then sends the processed information to the access network device through the antenna 2010.

The signal processing part 2030 may include a modem subsystem, configured to implement processing of data at each communication protocol layer. The signal processing part 2030 may further include a central processing subsystem, configured to implement processing of an operating system and an application layer of the terminal device. In addition, the signal processing part 2030 may further include another subsystem, for example, a multimedia subsystem or a peripheral subsystem. The multimedia subsystem is configured to control a camera, a screen display, and the like of the terminal device, and the peripheral subsystem is configured to implement a connection to another device. The modem subsystem may be a separately disposed chip.

The modem subsystem may include one or more processing elements 2031, for example, include a main control CPU and another integrated circuit. In addition, the modem subsystem may further include a storage element 2032 and an interface circuit 2033. The storage element 2032 is configured to store data and a program. However, a program used to perform the method performed by the terminal device in the foregoing method may not be stored in the storage element 2032, but is stored in a memory outside the modem subsystem, and is loaded and used by the modem subsystem. The interface circuit 2033 is configured to be in communication with another subsystem.

The modem subsystem may be implemented by using a chip. The chip includes at least one processing element and an interface circuit. The processing element is configured to perform the steps of any method performed by the terminal device. The interface circuit is configured to be in communication with another apparatus. In an implementation, units of the terminal device that implement the steps in the foregoing methods may be implemented in a form in which a processing element schedules a program. For example, an apparatus for the terminal device includes a processing element and a storage element. The processing element calls a program stored in the storage element, to perform the method performed by the terminal device in the foregoing method embodiments. The storage element may be a storage element that is located on a same chip as the processing element, that is, an on-chip storage element.

In another implementation, the program used to perform the method performed by the terminal device in the foregoing method may be in a storage element located on a different chip from the processing element, that is, an off-chip storage element. In this case, the processing element calls or loads the program from the off-chip storage element to the on-chip storage element, to call and perform the method performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of these integrated circuits. These integrated circuits may be integrated together to form a chip.

Units of the terminal device that implement the steps in the foregoing methods may be integrated together, and implemented in a form of an SOC. The SOC chip is configured to implement the foregoing methods. At least one processing element and a storage element may be integrated into the chip, and the processing element calls a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented in a form in which the processing element calls a program, and functions of some units are implemented in a form of the integrated circuit.

It can be learned that the foregoing apparatus for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, that is, by calling a program stored in the storage element; or may perform some or all steps performed by the terminal device, in a second manner, that is, by using a hardware integrated logical circuit in the processing element in combination with instructions; or may certainly perform, by combining the first manner and the second manner, some or all steps performed by the terminal device.

The processing element herein is the same as that described above, and may be implemented through a processor. A function of the processing element may be the same as a function of the processing unit described in FIG. 19. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of these integrated circuit forms. The storage element may be implemented by using a memory, and a function of the storage element may be the same as a function of the storage unit described in FIG. 19. The storage element may be implemented by using a memory, and a function of the storage element may be the same as a function of the storage unit described in FIG. 19. The storage element may be a memory, or may be a general name of a plurality of memories.

The terminal device shown in FIG. 20 can implement processes involved in the terminal device in the foregoing method embodiments. Operations and/or functions of modules in the terminal device shown in FIG. 20 are respectively intended to implement corresponding procedures in the foregoing method embodiments. For details, refer to the descriptions in the foregoing method embodiments. To avoid repetition, detailed descriptions are appropriately omitted herein.

FIG. 21 is a schematic diagram of a structure of a network device according to an embodiment of this application. The network device may be an access network device (for example, a base station). The access network device 210 may include one or more DUs 2101 and one or more CUs 2102. The DU 2101 may include at least one antenna 21011, at least one radio unit 21012, at least one processor 21013, and at least one memory 21014. The DU 2101 is mainly configured to receive and send a radio frequency signal, convert a radio frequency signal and a baseband signal, and perform some baseband processing. The CU 2102 may include at least one processor 21022 and at least one memory 21021.

The CU 2102 is mainly configured to perform baseband processing, control the access network device, and the like. The DU 2101 and the CU 2102 may be physically disposed together, or may be physically separate, that is, in a distributed base station. The CU 2102 is a control center of the access network device, may also be referred to as a processing unit, and is mainly configured to complete a baseband processing function. For example, the CU 2102 may be configured to control the access network device to perform operation procedures related to the access network device in the foregoing method embodiments.

In addition, optionally, the access network device 210 may include one or more radio units, one or more DUs, and one or more CUs. The DU may include at least one processor 21013 and at least one memory 21014. The radio unit may include at least one antenna 21011 and at least one radio unit 21012. The CU may include at least one processor 21022 and at least one memory 21021.

In an example, the CU 2102 may include one or more boards. A plurality of boards may jointly support a radio access network (for example, a 5G network) with a single access indication, or may separately support radio access networks (for example, an LTE network, a 5G network, or another network) with different access standards. The memory 21021 and the processor 21022 may serve one or more boards. In other words, a memory and a processor may be disposed on each board. Alternatively, a plurality of boards may share a same memory and a same processor. In addition, a necessary circuit may be disposed on each board. The DU 2101 may include one or more boards. A plurality of boards may jointly support a radio access network (for example, a 5G network) with a single access indication, or may separately support radio access networks (for example, an LTE network, a 5G network, or another network) with different access standards. The memory 21014 and the processor 21013 may serve one or more boards. In other words, a memory and a processor may be disposed on each board. Alternatively, a plurality of boards may share a same memory and a same processor. In addition, a necessary circuit may be disposed on each board.

The access network device shown in FIG. 21 can implement processes involved in the access network device in the foregoing method embodiments. Operations and/or functions of modules in the access network device shown in FIG. 21 are respectively intended to implement corresponding procedures in the foregoing method embodiments. For details, refer to the descriptions in the foregoing method embodiments. To avoid repetition, detailed descriptions are appropriately omitted herein.

In embodiments of this application, the terms "system" and "network" may be used interchangeably. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between associated objects. "At least one of the following items (pieces)" or a similar expression thereof means any combination of these items, including any combination of singular items (pieces) or plural items (pieces). For example, "at least one of A, B, or C" includes A, B, C, AB, AC, BC, or ABC. In addition, unless otherwise specified, sequential numbers "first" and "second" mentioned in embodiments of this application are used to distinguish a plurality of objects, but are not used to limit the order, time sequence, priority, or importance of the plurality of objects.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or another programmable device, to generate computer-implemented processing. Therefore, the instructions executed on the computer or another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of the claims and their equivalent technologies.

## Claims

1. A reference signal sending method, comprising:
switching, by a terminal device, from a first carrier of a first serving cell to a second carrier of a non-serving cell; and
sending, by the terminal device, a sounding reference signal SRS by using the second carrier.

2. The method according to claim 1, further comprising:
receiving, by the terminal device, configuration information of the SRS from an access network device, wherein the configuration information of the SRS comprises at least indication information of an SRS frequency; and
determining, by the terminal device, the second carrier based on the indication information of the SRS frequency.

3. The method according to claim 1 or 2, wherein the switching, by a terminal device, from a first carrier of a serving cell to a second carrier of a non-serving cell comprises:
interrupting, by the terminal device, communication on the first carrier; and
switching, by the terminal device, a radio frequency operating frequency of the terminal device from a radio frequency of the first carrier to a radio frequency of the second carrier.

4. The method according to any one of claims 1 to 3, further comprising:
receiving, by the terminal device, configuration information of a measurement gap from the access network device, wherein the measurement gap is a time range in which the SRS is allowed to be sent; and
the switching, by a terminal device, from a first carrier of a serving cell to a second carrier of a non-serving cell comprises:
performing, by the terminal device in the measurement gap, the steps of interrupting communication on the first carrier and switching a radio frequency operating frequency of the terminal device from a radio frequency of the first carrier to a radio frequency of the second carrier.

5. The method according to claim 4, wherein the measurement gap is a measurement gap in a first frequency range, and the interrupting, by the terminal device, communication on the first carrier comprises:
interrupting, by the terminal device in the measurement gap, communication of a serving cell comprised in the first frequency range.

6. The method according to claim 4, wherein the measurement interval is a measurement gap of the terminal device, and the interrupting, by the terminal device, communication on the first carrier comprises:
interrupting, by the terminal device, communication of all serving cells in the measurement gap.

7. The method according to any one of claims 1 to 3, further comprising:
receiving, by the terminal device, first indication information from the access network device, wherein the first indication information indicates the terminal device to interrupt communication on the first carrier or interrupt communication on a first frequency band that comprises the first carrier; and
interrupting, by the terminal device, communication on the first carrier or on the first frequency band before sending the SRS.

8. The method according to any one of claims 1 to 7, further comprising:
determining, by the terminal device, an uplink timing advance TA value of the SRS based on an uplink TA value of a second serving cell.

9. The method according to any one of claims 1 to 8, further comprising:
determining, by the terminal device, transmit power of the SRS based on a downlink reference signal of a third serving cell.

10. The method according to any one of claims 1 to 9, further comprising:
switching, by the terminal device, from the second carrier to the first carrier after the terminal device sends the SRS.

11. The method according to any one of claims 1 to 10, further comprising:
receiving, by the terminal device, a capability request message from the access network device or a core network device, wherein the capability request message comprises indication information of at least one target frequency band; and
sending, by the terminal device, a capability message of the terminal device to the access network device or the core network device, wherein the capability message of the terminal device indicates a capability of the terminal device to send the SRS on a carrier of a non-serving cell in the target frequency band.

12. A reference signal configuration method, comprising:
generating, by an access network device, configuration information of a sounding reference signal SRS; and
sending, by the access network device, the configuration information of the SRS to a terminal device, wherein the configuration information of the SRS is on a second carrier of a non-serving cell of the terminal device, and the configuration information of the SRS comprises at least indication information of an SRS frequency.

13. The method according to claim 2 or 12, wherein the indication information of the SRS frequency comprises at least one of the following: an absolute radio frequency channel number ARFCN of the SRS, a bandwidth of the second carrier, an available resource block RB set of the second carrier, or an ARFCN of the second carrier.

14. The method according to claim 2, 12, or 13, wherein the configuration information of the SRS is not related to a cell group configuration.

15. The method according to claim 14, wherein the configuration information of the SRS is carried in a first information element, and the first information element comprises a mobility measurement configuration information element of the terminal device.

16. The method according to claim 2, 12, or 13, wherein the configuration information of the SRS is related to a cell group configuration.

17. The method according to claim 16, wherein the configuration information of the SRS is carried in a second information element, the second information element is configured to configure a virtual carrier of the terminal device, and the second carrier is the virtual carrier.

18. The method according to any one of claims 12 to 17, further comprising:
receiving, by the access network device, the SRS from the terminal device on the second carrier.

19. The method according to any one of claims 12 to 18, further comprising:
sending, by the access network device, configuration information of a measurement gap to the terminal device, wherein the measurement gap is a time range in which the SRS is allowed to be sent.

20. The method according to claim 19, wherein the measurement gap is a measurement gap in a first frequency range or a measurement gap of the terminal device.

21. The method according to any one of claims 12 to 20, further comprising:
sending, by the access network device, first indication information to the terminal device, wherein the first indication information indicates the terminal device to interrupt communication on a first carrier or interrupt communication on a first frequency band that comprises the first carrier.

22. The method according to any one of claims 12 to 21, further comprising:
sending, by the access network device, a capability request message to the terminal device, wherein the capability request message comprises indication information of at least one target frequency band; and
receiving, by the access network device, a capability message from the terminal device, wherein the capability message of the terminal device indicates a capability of the terminal device to send the SRS on a non-serving cell in a target frequency band.

23. The method according to claim 11 or 22, wherein the capability message of the terminal device indicates at least one of the following:
a switching time for the terminal device to switch from a source frequency band to a target frequency band, a parameter of an SRS configured on the target frequency band, whether a carrier of the source frequency band supports partial switching, whether a carrier of the source frequency band supports partial radio frequency channel switching, a sub-carrier space of an SRS supported on the target frequency band, a bandwidth of an SRS supported on the target frequency band, information about one or more target frequency bands, or information, for each target frequency band, about a source frequency band that supports switching to the target frequency band.

24. A reference signal sending apparatus, comprising:
a processing unit, configured to switch from a first carrier of a first serving cell to a second carrier of a non-serving cell; and
a communication unit, configured to send a sounding reference signal SRS by using the second carrier.

25. The apparatus according to claim 24, wherein
the communication unit is further configured to receive configuration information of the SRS from an access network device, wherein the configuration information of the SRS comprises at least indication information of an SRS frequency; and
the processing unit is further configured to determine the second carrier based on the indication information of the SRS frequency.

26. The apparatus according to claim 24 or 25, wherein when switching from the first carrier of the serving cell to the second carrier of the non-serving cell, the processing unit is specifically configured to:
interrupt communication on the first carrier; and
switch a radio frequency operating frequency of a terminal device from a radio frequency of the first carrier to a radio frequency of the second carrier.

27. The apparatus according to any one of claims 24 to 26, wherein
the communication unit is further configured to receive configuration information of a measurement gap from the access network device, wherein the measurement gap is a time range in which the SRS is allowed to be sent; and
when switching from the first carrier of the serving cell to the second carrier of the non-serving cell, the processing unit is specifically configured to
perform, by the terminal device in the measurement gap, the steps of interrupting communication on the first carrier and switching a radio frequency operating frequency of the terminal device from a radio frequency of the first carrier to a radio frequency of the second carrier.

28. The apparatus according to claim 27, wherein the measurement gap is a measurement gap in a first frequency range, and when interrupting communication on the first carrier, the processing unit is specifically configured to
interrupt, in the measurement gap, communication of a serving cell comprised in the first frequency range.

29. The apparatus according to claim 27, wherein the measurement interval is a measurement gap of the terminal device, and when interrupting communication on the first carrier, the processing unit is specifically configured to
interrupt communication of all serving cells in the measurement gap.

30. The apparatus according to any one of claims 24 to 26, wherein
the communication unit is further configured to receive first indication information from the access network device, wherein the first indication information indicates the terminal device to interrupt communication on the first carrier or interrupt communication on a first frequency band that comprises the first carrier; and
the processing unit is further configured to interrupt communication on the first carrier or on the first frequency band before sending the SRS.

31. The apparatus according to any one of claims 24 to 30, wherein
the processing unit is further configured to determine an uplink timing advance TA value of the SRS based on an uplink TA value of a second serving cell.

32. The apparatus according to any one of claims 24 to 31, wherein the processing unit is further configured to determine transmit power of the SRS based on a downlink reference signal of a third serving cell.

33. The apparatus according to any one of claims 24 to 32, wherein the processing unit is further configured to switch from the second carrier to the first carrier after the terminal device sends the SRS.

34. The apparatus according to any one of claims 24 to 33, wherein the communication unit is further configured to:
receive a capability request message from the access network device or a core network device, wherein the capability request message comprises indication information of at least one target frequency band; and
send a capability message of the terminal device to the access network device or the core network device, wherein the capability message of the terminal device indicates a capability of the terminal device to send the SRS on a carrier of a non-serving cell in the target frequency band.

35. A reference signal configuration apparatus, comprising:
a processing unit, configured to generate configuration information of a sounding reference signal SRS; and
a communication unit, configured to send the configuration information of the SRS to a terminal device, wherein the configuration information of the SRS is on a second carrier of a non-serving cell of the terminal device, and the configuration information of the SRS comprises at least indication information of an SRS frequency.

36. The apparatus according to claim 25 or 35, wherein the indication information of the SRS frequency comprises at least one of the following: an absolute radio frequency channel number ARFCN of the SRS, a bandwidth of the second carrier, an available resource block RB set of the second carrier, or an ARFCN of the second carrier.

37. The apparatus according to claim 25, 35, or 36, wherein the configuration information of the SRS is not related to a cell group configuration.

38. The apparatus according to claim 37, wherein the configuration information of the SRS is carried in a first information element, and the first information element comprises a mobility measurement configuration information element of the terminal device.

39. The apparatus according to claim 25, 35, or 36, wherein the configuration information of the SRS is related to a cell group configuration.

40. The apparatus according to claim 39, wherein the configuration information of the SRS is carried in a second information element, the second information element is configured to configure a virtual carrier of the terminal device, and the second carrier is the virtual carrier.

41. The apparatus according to any one of claims 35 to 40, wherein
the communication unit is further configured to receive the SRS from the terminal device on the second carrier.

42. The apparatus according to any one of claims 35 to 41, wherein
the communication unit is further configured to send configuration information of a measurement gap to the terminal device, wherein the measurement gap is a time range in which the SRS is allowed to be sent.

43. The apparatus according to claim 42, wherein the measurement gap is a measurement gap in a first frequency range or a measurement gap of the terminal device.

44. The apparatus according to any one of claims 35 to 43, wherein
the communication unit is further configured to send first indication information to the terminal device, wherein the first indication information indicates the terminal device to interrupt communication on the first carrier or interrupt communication on a first frequency band that comprises the first carrier.

45. The apparatus according to any one of claims 35 to 44, wherein the communication unit is further configured to:
send a capability request message to the terminal device, wherein the capability request message comprises indication information of at least one target frequency band; and
receive a capability message from the terminal device, wherein the capability message of the terminal device indicates a capability of the terminal device to send the SRS on a non-serving cell in a target frequency band.

46. The apparatus according to claim 34 or 45, wherein the capability message of the terminal device indicates at least one of the following:
a switching time for the terminal device to switch from a source frequency band to a target frequency band, a parameter of an SRS configured on the target frequency band, whether a carrier of the source frequency band supports partial switching, whether a carrier of the source frequency band supports partial radio frequency channel switching, a sub-carrier space of an SRS supported on the target frequency band, a bandwidth of an SRS supported on the target frequency band, information about one or more target frequency bands, or information, for each target frequency band, about a source frequency band that supports switching to the target frequency band.

47. A system, comprising the apparatus according to any one of claims 24 to 34 and the apparatus according to any one of claims 35 to 46, or comprising the apparatus according to any one of claims 24 to 34 and a location management function LMF network element.

48. A computer-readable storage medium, wherein the computer-readable storage medium stores instructions, and when the instructions are run on a computer, the computer is enabled to perform the method according to any one of claims 1 to 11 or the method according to any one of claims 12 to 23.

49. A computer program product, comprising instructions, wherein when the instructions are run on a computer, the computer is enabled to perform the method according to any one of claims 1 to 11 or the method according to any one of claims 12 to 23.
